# EUROPEAN PATENT APPLICATION

(11) **EP 4 823 198 A1**
(43) Date of publication of application: **14.10.2026**
(21) Application number: 24911588.2
(22) Date of filing: 28.12.2024
(51) Int. Cl.: H04W 72/04

(54) **MODULATION METHOD AND APPARATUS, AND DEMODULATION METHOD AND APPARATUS**

(30) Priority: 29.12.2023 CN 202311869958
(71) Applicant: Huawei Technologies Co., Ltd., Shenzhen, Guangdong 518129 (CN)
(72) Inventor: CHAI, Xiaomeng, Shenzhen, Guangdong 518129 (CN); JIN, Yu, Shenzhen, Guangdong 518129 (CN); SUN, Yan, Shenzhen, Guangdong 518129 (CN)
(74) Representative: MERH-IP Matias Erny Reichl Hoffmann Patentanwälte PartG mbB
(86) International application number: PCT/CN2024/143518
(87) International publication number: WO 2025/140674

(57) **Abstract**

A modulation method, a demodulation method, and an apparatus may be applied to the field of communication technologies. The method includes: A first apparatus obtains a to-be-modulated TB, modulates the TB based on at least two mapping relationships, and outputs modulation symbols. A resource used to transmit the TB includes M resource units, and at least two of the M resource units correspond to different mapping relationships. After receiving a signal transmitted through a channel, a second apparatus processes the signal to obtain to-be-demodulated information, and demodulates the to-be-demodulated information based on the at least two mapping relationships, to obtain the TB. According to the method, a matched mapping relationship may be designed for each resource unit, so that demodulation performance can be effectively improved. Further, the at least two mapping relationships are determined based on channel environment information of the M resource units. For example, a mapping relationship corresponding to a resource unit is determined based on channel environment information of the resource unit by using an AI model.

## Description

This application claims priority to Chinese Patent Application No. 202311869958.X, filed with the China National Intellectual Property Administration on December 29, 2023, and entitled "MODULATION METHOD, DEMODULATION METHOD, AND APPARATUS", which is incorporated herein by reference in its entirety.

### TECHNICAL FIELD

This application relates to the field of communication technologies, and in particular, to a modulation method, a demodulation method, and an apparatus.

### BACKGROUND

Modulation refers to mapping a discrete bit stream including 0 and 1 into modulation symbols in a specific manner for signal sending. Demodulation is a reverse process of modulation, that is, to restore a received signal back into a bit stream.

For example, a modulation process may be as follows: A transmit end obtains a to-be-modulated transport block (transport block, TB), and then modulates the TB by using a mapping relationship. The mapping relationship is a mapping relationship between a bit and a modulation symbol. For example, the transmit end may modulate the TB through binary phase shift keying modulation (binary phase shift keying modulation, BPSK). For another example, the transmit end may modulate the TB through 16 quadrature amplitude modulation (16 quadrature amplitude modulation, 16QAM).

However, when the TB is modulated by using the foregoing mapping relationship, impact of a channel is not considered, and consequently demodulation performance is not high enough.

### SUMMARY

Embodiments of this application provide a modulation method, a demodulation method, and an apparatus, so that a mapping relationship can be designed with reference to impact of a channel, and demodulation performance can be effectively improved.

According to a first aspect, an embodiment of this application provides a modulation method. The method is applied to a first apparatus. The method includes:
obtaining a to-be-modulated transport block TB, where a resource used to transmit the TB includes M resource units, and M is an integer greater than or equal to 2; modulating the TB based on at least two mapping relationships, to obtain modulation symbols, where at least two of the M resource units correspond to different mapping relationships, and the mapping relationship is a mapping relationship between a bit and a modulation symbol; and outputting the modulation symbols.

The first apparatus may include a network device, or a chip, a functional module, or the like disposed in the network device. Alternatively, the first apparatus may include a terminal device, or a chip, a functional module, or the like that may be disposed in the terminal device. The at least two resource units correspond to different mapping relationships because channel environment information of the at least two resource units is different. A quantity of mapping relationships in the at least two mapping relationships may be E, and E is an integer less than or equal to M and greater than or equal to 2. There is no same mapping relationship in the E mapping relationships shown herein.

In this embodiment of this application, the first apparatus may match different mapping relationships with reference to different resource units. For example, channel environment information of at least two of M resource units may be different. Therefore, the at least two resource units correspond to different mapping relationships. Generally, a propagation model of a signal is y=h•s+n, where h is a channel, s is a signal obtained by processing a modulation symbol sent by the first apparatus, and n is noise. It can be learned from that the signal received by a second apparatus is affected by the channel, the modulation symbol, and the noise, and demodulation performance depends on whether the sent modulation symbol can be restored from the received signal, that is, received signals of different modulation symbols are distinguished. Therefore, for each specific channel and noise (for example, a channel environment shown in this embodiment of this application), demodulation performance of different modulation schemes is different. Sending, on each resource unit, a modulation symbol that matches a channel environment of the resource unit can improve demodulation performance.

In a possible implementation, the method further includes: When the first apparatus includes a network device or a chip or a functional module used in the network device, the first apparatus sends modulation and coding scheme (modulation and coding scheme, MCS) information; or when the first apparatus includes a terminal device or a chip or a functional module used in the terminal device, the first apparatus receives modulation and coding scheme MCS information.

In this embodiment of this application, the MCS information may indicate at least one of the following: an encoding code rate of the TB, a mapping relationship corresponding to each of the M resource units, and a modulation order of each mapping relationship.

In a possible implementation, the MCS information indicates an encoding code rate of the TB and the at least two mapping relationships, or the MCS information indicates an encoding code rate of the TB, the at least two mapping relationships, and modulation orders corresponding to the at least two mapping relationships.

In a possible implementation, the MCS information further indicates a resource unit corresponding to each of the at least two mapping relationships.

In an example, the MCS information may indicate the encoding code rate of the TB and M mapping relationships. The M mapping relationships may one to one correspond to the M resource units. For example, the M mapping relationships may sequentially correspond to the M resource units in ascending order of frequencies. For another example, the M mapping relationships may sequentially correspond to the M resource units in a time sequence.

In another example, the MCS information may indicate the encoding code rate of the TB, E mapping relationships, and a resource unit corresponding to each mapping relationship.

In a possible implementation, a mapping relationship set corresponding to a modulation order of each of the at least two mapping relationships is predefined in a protocol, and each of the at least two mapping relationships is included in the mapping relationship set corresponding to the modulation order of each mapping relationship.

In this embodiment of this application, the mapping relationship set corresponding to the modulation order is predefined in the protocol, so that signaling overheads caused by configuring the modulation order and the mapping relationship can be reduced.

In a possible implementation, a mapping relationship set corresponding to a modulation order of each of the at least two mapping relationships is configured, and each of the at least two mapping relationships is included in the mapping relationship set corresponding to the modulation order of each mapping relationship.

In this embodiment of this application, a network device configures the mapping relationship set corresponding to the modulation order, so that more or fewer mapping relationships can be more flexibly configured for a terminal device. In addition, the network device configures a mapping relationship with reference to channel environment information. Therefore, the mapping relationship configured by the network device for the terminal device can better adapt to the channel environment information.

In a possible implementation, the MCS information indicates an encoding code rate of the TB, or the MCS information indicates an encoding code rate of the TB and modulation orders corresponding to the at least two mapping relationships.

In a possible implementation, the at least two mapping relationships and the modulation orders corresponding to the at least two mapping relationships are determined based on channel environment information of the M resource units, or the at least two mapping relationships are determined based on channel environment information of the M resource units.

In this embodiment of this application, E mapping relationships are dynamically determined based on the channel environment information of the M resource units, so that the determined mapping relationships can better match current channels, thereby further improving demodulation performance.

In a possible implementation, the at least two resource units have different channel environment information.

In a possible implementation, the method further includes: sending the channel environment information; or sending indication information, where the indication information indicates the at least two mapping relationships.

In this embodiment of this application, the first apparatus may send, to the second apparatus, channel environment information that is used by the first apparatus to determine a mapping relationship, so that the second apparatus may also determine the mapping relationship by using the channel environment information. This can ensure, as much as possible, that channel environment information used by both communication parties to determine the mapping relationship is consistent, thereby improving accuracy of mapping relationship prediction.

In an example, the indication information may include indexes of M mapping relationships, and the M mapping relationships may one to one correspond to the M resource units. In another example, the indication information may include indexes of E mapping relationships and an index of a resource unit corresponding to each mapping relationship.

In this embodiment of this application, the first apparatus may also send, to the second apparatus, a mapping relationship determined by the first apparatus, so that both communication parties can perform modulation or demodulation by using the same mapping relationship. This further ensures that both the communication parties can perform modulation or demodulation by using the same mapping relationship.

In a possible implementation, the channel environment information indicates a channel environment type corresponding to channel information, or the channel environment information indicates channel information and a channel environment type corresponding to the channel information, or the channel environment information indicates channel information of a first channel environment type.

In a possible implementation, the method further includes: When the first apparatus includes a network device or a chip or a functional module used in the network device, the first apparatus sends resource unit division information, where the resource unit division information indicates locations of the M resource units; or when the first apparatus includes a terminal device or a chip or a functional module used in the terminal device, the first apparatus receives resource unit division information, where the resource unit division information indicates locations of the M resource units.

In a possible implementation, frequency domain start locations of the M resource units are determined based on a start location of a bandwidth part (bandwidth part, BWP) in which the resource is located.

In a possible implementation, the M resource units are M frequency domain resource units, M time domain resource units, or M time-frequency resource units.

According to a second aspect, an embodiment of this application provides a demodulation method. The method is applied to a second apparatus. The method includes:
obtaining to-be-demodulated information of a modulation symbol, where a resource used to transmit the to-be-demodulated information includes M resource units, and M is an integer greater than or equal to 2; and demodulating the to-be-demodulated information based on at least two mapping relationships, to obtain a transport block TB, where at least two of the M resource units correspond to different mapping relationships, and the mapping relationship is a mapping relationship between a bit and a modulation symbol.

The second apparatus may include a network device, or a chip, a functional module, or the like disposed in the network device. Alternatively, the second apparatus may include a terminal device, or a chip, a functional module, or the like that may be disposed in the terminal device. In an example, a first apparatus includes a network device, and the second apparatus includes a terminal device. In another example, a first apparatus includes a terminal device, and the second apparatus includes a network device.

In a possible implementation, the method further includes: When the second apparatus includes a terminal device or a chip or a functional module used in the terminal device, the second apparatus receives modulation and coding scheme MCS information; or when the second apparatus includes a network device or a chip or a functional module used in the network device, the second apparatus sends modulation and coding scheme MCS information.

In this embodiment of this application, the MCS information may indicate at least one of the following: an encoding code rate of the TB, a mapping relationship corresponding to each of the M resource units, and a modulation order of each mapping relationship.

In a possible implementation, the MCS information indicates an encoding code rate of the TB and the at least two mapping relationships, or the MCS information indicates an encoding code rate of the TB, the at least two mapping relationships, and modulation orders corresponding to the at least two mapping relationships.

In a possible implementation, the MCS information further indicates a resource unit corresponding to each of the at least two mapping relationships.

In a possible implementation, a mapping relationship set corresponding to a modulation order of each of the at least two mapping relationships is predefined in a protocol or is configured, and each of the at least two mapping relationships is included in the mapping relationship set corresponding to the modulation order of each mapping relationship.

In a possible implementation, the demodulating the to-be-demodulated information based on the at least two mapping relationships includes: determining the at least two mapping relationships based on the MCS information and the mapping relationship set, and demodulating the to-be-demodulated information based on the at least two mapping relationships.

In a possible implementation, the MCS information indicates an encoding code rate of the TB, or the MCS information indicates an encoding code rate of the TB and modulation orders corresponding to the at least two mapping relationships.

In a possible implementation, the at least two mapping relationships and the modulation orders corresponding to the at least two mapping relationships are determined based on channel environment information of the M resource units, or the at least two mapping relationships are determined based on channel environment information of the M resource units.

In a possible implementation, the at least two resource units have different channel environment information.

In a possible implementation, the channel environment information indicates a channel environment type corresponding to channel information, or the channel environment information indicates channel information and a channel environment type corresponding to the channel information, or the channel environment information indicates channel information of a first channel environment type.

In a possible implementation, the demodulating the to-be-demodulated information based on the at least two mapping relationships includes: receiving the channel environment information, determining the at least two mapping relationships based on the MCS information and the channel environment information, and demodulating the to-be-demodulated information based on the at least two mapping relationships; or receiving indication information, determining the at least two mapping relationships based on the MCS information and the indication information, and demodulating the to-be-demodulated information based on the at least two mapping relationships, where the indication information indicates the at least two mapping relationships.

In a possible implementation, the method further includes: When the second apparatus includes a terminal device or a chip or a functional module used in the terminal device, the second apparatus receives resource unit division information, where the resource unit division information indicates locations of the M resource units; or when the second apparatus includes a network device or a chip or a functional module used in the network device, the second apparatus sends resource unit division information, where the resource unit division information indicates locations of the M resource units.

In a possible implementation, frequency domain start locations of the M resource units are determined based on a start location of a bandwidth part BWP in which the resource is located.

In a possible implementation, the M resource units are M frequency domain resource units, M time domain resource units, or M time-frequency resource units.

For specific descriptions of the second aspect, refer to the first aspect. Details are not described herein again.

According to a third aspect, an embodiment of this application provides a constellation diagram obtaining method, including:
inputting channel environment information of a first resource unit into an AI model, and outputting a constellation diagram corresponding to the first resource unit.

The constellation diagram is a constellation diagram corresponding to one or more modulation orders.

The constellation diagram is a mapping relationship between a bit and a modulation symbol.

The constellation diagram may be replaced with a modulation parameter. The modulation parameter may include K modulation symbols, and the K modulation symbols are all possible modulation symbols in a current modulation scheme, and respectively correspond to all possible values of L bits, where K=2^{L}. Both K and L are positive integers. A value of K may be obtained based on L.

In a possible implementation, the method further includes:
inputting a modulation order into the AI model, and outputting a constellation diagram corresponding to the modulation order.

According to a fourth aspect, an embodiment of this application provides a modulation method, including:
inputting channel environment information of a first resource unit and a first to-be-sent bit into an AI model, and outputting a first to-be-sent modulation symbol corresponding to the first resource unit, where a first mapping relationship from the first to-be-sent bit to the first to-be-sent modulation symbol has a first modulation order.

In a possible implementation, the method further includes:
inputting the first modulation order into the AI model.

In a possible implementation, the method further includes:
inputting channel environment information of a second resource unit and a second to-be-sent bit into the AI model, and outputting a second to-be-sent modulation symbol corresponding to the second resource unit, where a second mapping relationship from the second to-be-sent bit to the second to-be-sent modulation symbol has the first modulation order or a second modulation order.

According to a fifth aspect, an embodiment of this application provides a demodulation method, including:
inputting channel environment information of a first resource unit and a first to-be-demodulated signal into an AI model, and outputting a first bit corresponding to the first resource unit, where a first mapping relationship from the first to-be-demodulated signal to the first bit has a first modulation order.

In a possible implementation, the method further includes:
inputting the first modulation order into the AI model.

In a possible implementation, the method further includes:
inputting channel environment information of a second resource unit and a second to-be-demodulated signal into the AI model, and outputting a second bit corresponding to the second resource unit, where a second mapping relationship from the second to-be-demodulated signal to the second bit has the first modulation order or a second modulation order.

By using at least one method in the third aspect to the fifth aspect, a modulation symbol that matches a channel environment of each resource unit may be sent on each resource unit, so that demodulation performance can be improved.

According to a sixth aspect, an embodiment of this application provides a first apparatus, configured to perform the method in any one of the first aspect to the fifth aspect or the possible implementations of the first aspect to the fifth aspect. The first apparatus includes a module that performs the method in any one of the first aspect to the fifth aspect or the possible implementations of the first aspect to the fifth aspect.

According to a seventh aspect, an embodiment of this application provides a first apparatus. The first apparatus includes a processing circuit, configured to perform the method according to any one of the first aspect or the possible implementations of the first aspect. The processing circuit is configured to execute a program stored in a memory. When the program is executed, the method in any one of the first aspect or the possible implementations of the first aspect is performed.

In a possible implementation, the memory is located outside the first apparatus.

In a possible implementation, the memory is located inside the first apparatus.

In this embodiment of this application, the processing circuit and the memory may alternatively be integrated into one device. In other words, the processing circuit and the memory may alternatively be integrated together. For example, the first apparatus may be a chip.

In a possible implementation, the first apparatus further includes a transceiver circuit, and the transceiver circuit is configured to receive information (or input information) or send information (or output information).

According to an eighth aspect, an embodiment of this application provides a second apparatus. The second apparatus includes a processing circuit, configured to perform the method according to any one of the second aspect or the possible implementations of the second aspect. The processing circuit is configured to execute a program stored in a memory. When the program is executed, the method in any one of the second aspect or the possible implementations of the second aspect is performed.

In a possible implementation, the memory is located outside the second apparatus.

In a possible implementation, the memory is located inside the second apparatus.

In this embodiment of this application, the processing circuit and the memory may alternatively be integrated into one device. In other words, the processing circuit and the memory may alternatively be integrated. For example, the second apparatus may be a chip.

In a possible implementation, the second apparatus further includes a transceiver circuit, and the transceiver circuit is configured to receive information or send information.

According to a ninth aspect, an embodiment of this application provides an apparatus, where the apparatus includes one or more of the following AI models, and is configured to process the AI model:
a first AI model, where an input of the first AI model includes channel environment information of a first resource unit, and an output of the first AI model includes a constellation diagram corresponding to the first resource unit;
a second AI model, where an input of the second AI model includes channel environment information of a first resource unit and a first to-be-sent bit, and an output of the second AI model includes a first to-be-sent modulation symbol corresponding to the first resource unit, where a first mapping relationship from the first to-be-sent bit to the first to-be-sent modulation symbol has a first modulation order; or
a third AI model, where an input of the third AI model includes channel environment information of a first resource unit and a first to-be-demodulated signal, and an output of the third AI model includes a first bit corresponding to the first resource unit, where a first mapping relationship from the first to-be-demodulated signal to the first bit has a first modulation order.

In a possible implementation, a constellation diagram output by the first AI model is a constellation diagram corresponding to one or more modulation orders.

Optionally, the constellation diagram is a mapping relationship between a bit and a modulation symbol.

Optionally, the constellation diagram may be replaced with a modulation parameter. The modulation parameter may include K modulation symbols, and the K modulation symbols are all possible modulation symbols in a current modulation scheme, and respectively correspond to all possible values of L bits, where K=2^{L}. Both K and L are positive integers. A value of K may be obtained based on L.

In a possible implementation, the input of the first AI model further includes a modulation order, and the output constellation diagram is a constellation diagram corresponding to the modulation order.

In a possible implementation, the output of the first AI model further includes a modulation order.

In a possible implementation, the input of the second AI model further includes the first modulation order.

In a possible implementation, the output of the second AI model further includes a modulation order.

In a possible implementation, the input of the third AI model further includes the first modulation order.

In a possible implementation, the output of the third AI model further includes a modulation order.

According to a tenth aspect, an embodiment of this application provides an apparatus. The first apparatus includes a processing circuit, configured to perform the method according to any one of the third aspect to the fifth aspect or the possible implementations of the third aspect to the fifth aspect.

According to an eleventh aspect, an embodiment of this application provides a first apparatus, where the first apparatus includes a processing circuit and a transceiver circuit, the processing circuit may be a logic circuit, the transceiver circuit may be an interface circuit, and the logic circuit is coupled to the interface circuit; and the interface circuit is configured to input and/or output information, and the logic circuit is configured to perform the method according to any one of the first aspect or the possible implementations of the first aspect.

According to a twelfth aspect, an embodiment of this application provides a second apparatus, where the second apparatus includes a processing circuit and a transceiver circuit, the processing circuit may be a logic circuit, the transceiver circuit may be an interface circuit, and the logic circuit is coupled to the interface; and the interface circuit is configured to input and/or output information, and the logic circuit is configured to perform the method according to any one of the second aspect or the possible implementations of the second aspect.

According to a thirteenth aspect, an embodiment of this application provides a computer-readable storage medium. The computer-readable storage medium is configured to store a computer program, and when the computer program is run on a computer, the method in any one of the first aspect to the fifth aspect or the possible implementations of the first aspect to the fifth aspect is performed.

According to a fourteenth aspect, an embodiment of this application provides a computer program product. When the computer program product runs on a computer, the method in any one of the first aspect to the fifth aspect or the possible implementations of the first aspect to the fifth aspect is performed.

According to a fifteenth aspect, an embodiment of this application provides a computer program. When the computer program is run on a computer, the method in any one of the first aspect to the fifth aspect or the possible implementations of the first aspect to the fifth aspect is performed.

According to a sixteenth aspect, an embodiment of this application provides a communication system, where the communication system includes one or more of a first apparatus, a second apparatus, the apparatus according to any one of the ninth aspect or the possible implementations of the ninth aspect, and the apparatus according to any one of the tenth aspect or the possible implementations of the tenth aspect, the first apparatus is configured to perform the method according to any one of the first aspect or the possible implementations of the first aspect, and the second apparatus is configured to perform the method according to any one of the second aspect or the possible implementations of the second aspect.

### BRIEF DESCRIPTION OF DRAWINGS

FIG. 1a is a diagram of an architecture of a communication system according to an embodiment of this application;
FIG. 1b is a diagram of an architecture of another communication system according to an embodiment of this application;
FIG. 2a is a diagram of a neuron structure according to an embodiment of this application;
FIG. 2b is a diagram of a layer relationship of a neural network according to an embodiment of this application;
FIG. 2c is a diagram of an artificial intelligence (artificial intelligence, AI) model according to an embodiment of this application;
FIG. 2d is a diagram of another AI model according to an embodiment of this application;
FIG. 2e is a diagram of still another AI model according to an embodiment of this application;
FIG. 3a is a diagram of a 16QAM mapping relationship according to an embodiment of this application;
FIG. 3b is a diagram of a quadrature phase shift keying (quadrature phase shift keying, QPSK) mapping relationship according to an embodiment of this application;
FIG. 3c is a diagram of a main procedure of a communication system according to an embodiment of this application;
FIG. 3d is a diagram of modulation schemes under different signal-to-noise ratios according to an embodiment of this application;
FIG. 4 is a schematic flowchart of a modulation method and a demodulation method according to an embodiment of this application;
FIG. 5a is a schematic flowchart shown by using an example in which a first apparatus is a terminal device and a second apparatus is a network device;
FIG. 5b is a schematic flowchart shown by using an example in which a first apparatus is a network device and a second apparatus is a terminal device;
FIG. 6a is a diagram of frequency domain resource division according to an embodiment of this application;
FIG. 6b is a diagram of frequency domain resource division according to an embodiment of this application;
FIG. 6c is a diagram of frequency domain resource division according to an embodiment of this application;
FIG. 7 is a diagram of a mapping relationship set according to an embodiment of this application;
FIG. 8 is a diagram of a reference signal according to an embodiment of this application;
FIG. 9a is a diagram of an AI model according to an embodiment of this application;
FIG. 9b is a diagram of another AI model according to an embodiment of this application;
FIG. 10 is a diagram of a structure of an apparatus according to an embodiment of this application;
FIG. 11 is a diagram of a structure of another apparatus according to an embodiment of this application; and
FIG. 12 is a diagram of a structure of still another apparatus according to an embodiment of this application.

### DESCRIPTION OF EMBODIMENTS

For ease of understanding technical solutions in this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that specific features, structures, or characteristics described in combination with embodiments may be included in at least one embodiment of this application. The phrase shown in each location in the specification may not necessarily refer to a same embodiment, and is not an independent or optional embodiment exclusive from another embodiment. It may be understood explicitly and implicitly by a person skilled in the art that embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a, b, and c".

In this application, information indicated by indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending. In addition, sending periodicities and/or sending occasions of the sub-information may be the same or may be different.

In this application, "sending" and "receiving" indicate signal transmission directions. For example, "sending information to XX" may be understood as that a destination end of the information is XX, and may include direct sending through an air interface, or may include indirect sending through an air interface by another unit or module. "Receiving information from YY" may be understood as that a source end of the information is YY, and may include direct receiving from YY through an air interface, or may include indirect receiving from YY via another unit or module through an air interface. "Sending" may also be understood as "outputting" of a chip interface, and "receiving" may also be understood as "inputting" of the chip interface. In other words, sending and receiving may be performed between devices, for example, between a network device and a terminal device, or may be performed within a device. For example, sending or receiving is performed between components, modules, chips, software modules, or hardware modules in a device by using a bus, a cable, or an interface.

Embodiments of this application provide a modulation method, a demodulation method, and an apparatus, to improve demodulation performance.

A communication system in embodiments of this application is described below.

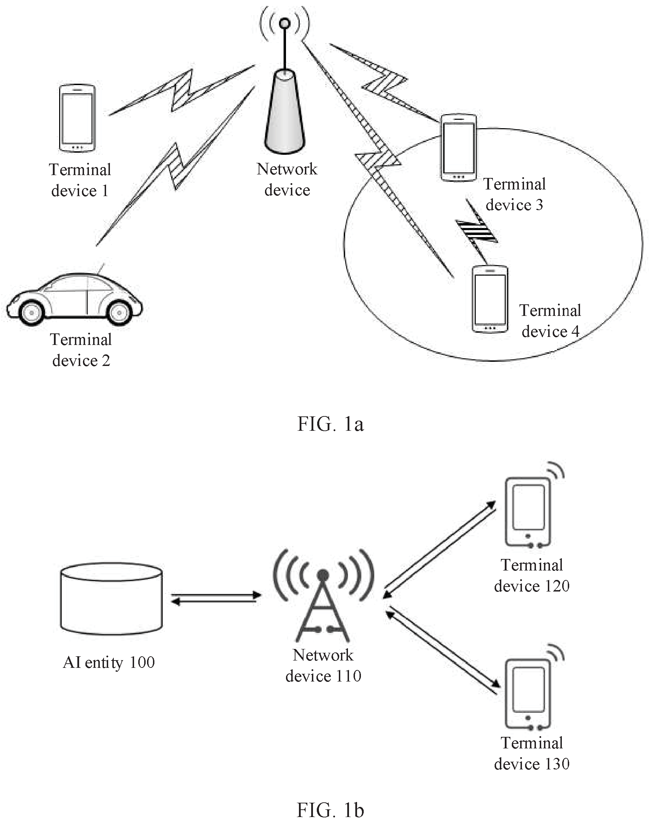

The method provided in embodiments of this application may be applied to various communication systems, for example, an internet of things (internet of things, IoT) system, a narrow band internet of things (narrow band internet of things, NB-IoT) system, a long term evolution (long term evolution, LTE) system, a 5th generation (5th generation, 5G) communication system, a new radio (new radio, NR) system, and a new communication system that emerges in future communication development. An IoT network may include, for example, but not limited to, an internet of vehicles. Communication manners in the internet of vehicles system may be collectively referred to as vehicle-to-everything (vehicle-to-everything, V2X, where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like. In FIG. 1a below, a terminal device (for example, a terminal device 3) and a terminal device (for example, a terminal device 4) may communicate with each other by using a device-to-device (device-to-device, D2D) technology, a machine-to-machine (machine-to-machine, M2M) technology, a V2X technology, or the like. The method provided in embodiments of this application may be further applied to non-terrestrial network (non-terrestrial network, NTN) communication (which may also be referred to as non-terrestrial network communication).

The method provided in embodiments of this application may be applied to a wireless local area network (wireless local area network, WLAN) system, for example, a Wi-Fi system. The method provided in embodiments of this application may be applied to institute of electrical and electronics engineers (institute of electrical and electronics engineers, IEEE) 802.11 series protocols such as the 802.11be protocol, the 802.11bn protocol, or a next-generation protocol of the 802.11bn protocol, which are not enumerated one by one. The technical solutions provided in embodiments of this application may be further applied to a wireless personal area network (wireless personal area network, WPAN) based on millimeter wave (millimeter wave, MMW) and ultra-wideband (ultra-wideband, UWB) technologies. For example, the method provided in embodiments of this application may be applied to IEEE 802.15 series protocols such as the 802.15.4a protocol, the 802.15.4z protocol, the 802.15.4ab protocol, or a future-generation UWB WPAN protocol, which are not enumerated one by one.

The method provided in embodiments of this application may be applied to two entities in a communication system. For example, one of the two entities may send information to the other entity, or receive information sent by the other entity. For example, the two entities may include a network device and a terminal device, or include a chip that may be disposed in the network device, a chip that may be disposed in the terminal device, and the like. Certainly, with progress of the standards, an entity of another type may appear subsequently. This is not limited in embodiments of this application.

FIG. 1a is a diagram of an architecture of a communication system according to an embodiment of this application. As shown in FIG. 1a, the communication system may include at least one network device and at least one terminal device, for example, a terminal device 1 to a terminal device 4 in FIG. 1a. The terminal device and the network device may communicate with each other through an air interface Uu link, an NTN link, or the like. For example, the terminal device 3 and the terminal device 4 may communicate with each other through a sidelink (sidelink) via D2D. A form of the terminal device shown in FIG. 1a is merely an example. For example, during specific implementation, the terminal device may further include a vehicle-mounted device, a vehicle-mounted terminal, or the like in the internet of vehicles. A specific form of the terminal device used in the internet of vehicles or the internet is not limited in embodiments of this application.

FIG. 1b is a diagram of an architecture of another communication system according to an embodiment of this application. As shown in FIG. 1b, the communication system may include at least one network device like a network device 110, at least one terminal device like a terminal device 120 and a terminal device 130, and an AI entity 100.

In an example, to support a machine learning function in a wireless network, a dedicated AI network element, module, or the like may be introduced in the wireless network. In this case, the AI entity 100 may correspond to an independent network element. For example, the network device may forward, to the AI entity, data that is related to the AI model and that is reported by the terminal device, and the AI entity performs AI-related operations such as training dataset construction and model training. The AI entity may further output, to the network device, AI-related operations such as a trained neural network model, model evaluation, and a test result, and the network device forwards the AI-related operations to each terminal device. Certainly, the AI entity may alternatively directly interact with the terminal device. When the AI entity corresponds to an independent network element, a specific interaction manner between the AI entity and the terminal device or the network device is not limited in embodiments of this application.

In another example, the AI entity 100 may alternatively be located inside a network element. The network element includes but is not limited to an access network device, a core network device, a server (for example, a cloud server), a network management system (operation, administration, and maintenance, OAM), a terminal device, or the like. For example, the AI entity 100 may be located inside the terminal device or the network device. For example, the AI entity 100 is located inside the network device, and the AI entity 100 may be a module of the network device. A specific deployment manner of the AI entity is not enumerated herein one by one.

In this embodiment of this application, the AI entity 100 may be configured to predict a mapping relationship between a bit and a modulation symbol with reference to channel environment information. Alternatively, the AI entity 100 may output a modulation symbol based on input channel environment information and a TB. For specific functions or steps performed by the AI entity 100, refer to the following descriptions of an AI model.

FIG. 1a and FIG. 1b show an example of one network device and a plurality of terminal devices. During specific implementation, the communication system may alternatively include more network devices, and a coverage area of each network device may include more or fewer terminal devices. This is not limited in embodiments of this application.

The terminal device and the network device is described below in detail.

The terminal device is an apparatus having a wireless transceiver function. The terminal device may communicate with an access network device (or referred to as an access device or the following network device) in a radio access network (radio access network, RAN). The terminal device may also be referred to as a user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor device, an outdoor device, a handheld device, or a vehicle-mounted device, may be deployed on water, including a ship, or may be deployed in air, for example, on an airplane, a balloon, or a satellite. In another possible implementation, the terminal device may be a handheld device, a vehicle-mounted device, a wearable device, a sensor, a terminal in an internet of things, a terminal in an internet of vehicles, an uncrewed aerial vehicle, a terminal device in any form in a 5G network or a future network, or the like having a wireless communication function. This is not limited in embodiments of this application. In still another possible implementation, the terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

In embodiments of this application, an apparatus configured to implement a function of the terminal device may be a terminal device, or may be an apparatus that can support the terminal device in implementing the function, for example, a chip system. The apparatus may be mounted in the terminal device or used in a manner of matching the terminal device. In embodiments of this application, the chip system may include a chip, or may include a chip and another discrete component. For ease of description, when some examples are used below, an example in which the apparatus configured to implement the function of the terminal device is a UE is used to describe the technical solutions provided in embodiments of this application.

The network device may be an apparatus that is deployed in a radio access network and that provides a wireless communication service for the terminal device. The network device may also be referred to as an access network device, an access device, a RAN device, or the like. For example, the network device may be a next generation NodeB (next generation NodeB, gNB), a next generation evolved NodeB (next generation evolved NodeB, ng-eNB), a network device in 6G communication, or the like. The network device may be any device having a wireless transceiver function, and includes but is not limited to the foregoing base stations (including a base station deployed on a satellite). Alternatively, the network device may be an apparatus that has a base station function in 6G. In an example, the network device may be an access node, a wireless relay node, a wireless backhaul node, or the like in a wireless local area network (wireless-fidelity, Wi-Fi) system. In another example, the network device may be a radio controller in a cloud radio access network (cloud radio access network, CRAN) scenario. In still another example, the network device may be a wearable device, a vehicle-mounted device, or the like that can provide a wireless communication service. In still another example, the network device may alternatively be a small cell, a transmission reception point (transmission reception point, TRP) (or referred to as a transmission point), or the like. In systems using different radio access technologies, names of apparatuses having network device functions may be different, which are not enumerated one by one in embodiments of this application.

In some deployments of the network device, the network device may include a central unit (central unit, CU), a distributed unit (distributed unit, DU), and the like. Functions of a part of protocol layers of the network device are controlled by the CU in a centralized manner. Functions of a part or all of remaining protocol layers are distributed in the DU, and the CU controls the DU in a centralized manner. In some other deployments of the network device, the CU may be further split into a CU-control plane (control plane, CP), a CU-user plane (user plane, UP), and the like. In still some other deployments of the network device, the network device may alternatively be in an open radio access network (open radio access network, ORAN) architecture. When the network device is in the ORAN architecture, the network device may be a functional entity, module, or the like in the ORAN. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the like. The deployment manners of the network device listed herein are merely examples. With evolution of standard technologies, the network device may have other deployment manners. This is not limited in embodiments of this application.

In embodiments of this application, an apparatus configured to implement a function of the network device may be a network device, or may be an apparatus that can support the network device in implementing the function, for example, a chip system. The apparatus may be mounted in the network device or used in a manner of matching the network device. For ease of description, when some specific examples are used below, an example in which the apparatus configured to implement the function of the network device is a base station is used to describe the technical solutions provided in embodiments of this application.

The method provided in embodiments of this application is described below by using a first apparatus and a second apparatus as an example. The first apparatus may be an apparatus for sending a modulated signal, and the second apparatus is an apparatus for receiving the signal. Alternatively, the first apparatus may also be referred to as a transmit end. The transmit end may be an apparatus configured to send a modulated signal. The second apparatus may also be referred to as a receive end. The receive end may be an apparatus configured to receive the signal. Specific names of the first apparatus and the second apparatus are not limited in embodiments of this application. In an example, the first apparatus may be an AI entity, a terminal device, or a chip or a functional module used in the AI entity or the terminal device, and the second apparatus may be an AI entity, a network device, or a chip or a functional module used in the AI entity or the network device. In another example, the first apparatus may be an AI entity, a network device, or a chip or a functional module used in the AI entity or the network device, and the second apparatus may be an AI entity, a terminal device, or a chip or a functional module used in the AI entity or the terminal device. In still another example, the first apparatus and the second apparatus may be different terminal devices or the like. Specific forms of the first apparatus and the second apparatus are not enumerated one by one herein.

Terms related in embodiments of this application are described below.

### 1. Resource unit

A resource used to transmit a TB may include a time domain resource and a frequency domain resource (or collectively referred to as a time-frequency domain resource or the like). In an example, the resource used to transmit the TB may be configured by a network device by using a dynamic scheduling method. For example, the network device may send downlink control information (downlink control information, DCI) to a terminal device, where the DCI may be used to configure the resource. In another example, the resource used to transmit the TB may also be configured by using a grant-free scheduling method. For example, the network device may send radio resource control (radio resource control, RRC) signaling to a terminal device, where the RRC signaling may be used to configure the resource. The grant-free scheduling may include a preconfigured uplink resource (preconfigured uplink resource, PUR)/a configured grant (configured grant, CG), and the like. For example, the frequency domain resource used to transmit the TB may also be referred to as a scheduled bandwidth or the like. A specific name of the frequency domain resource is not limited in embodiments of this application.

The time domain resource used to transmit the TB may include M₁ time domain resource units, and the frequency domain resource used to transmit the TB may include M₂ frequency domain resource units. M₁=M, M₂=M, or M₁*M₂=M. The M resource units may be M frequency domain resource units, M time domain resource units, or M time-frequency resource units. The method provided in embodiments of this application is applicable to the time domain resource used to transmit the TB, or is applicable to the frequency domain resource used to transmit the TB. Optionally, the M resource units shown in embodiments of this application may further include M₃ space domain resource units.

For example, a frequency domain resource unit shown in embodiments of this application may include one or more resource elements (resource elements, REs), one or more subcarriers, one or more resource blocks (resource blocks, RBs), one or more subchannels, or the like. How to measure a frequency domain resource unit is not limited in embodiments of this application. For example, a frequency domain resource unit may also be referred to as a subband. A specific name of the frequency domain resource unit is not limited in embodiments of this application. In an example, bandwidths of all the M frequency domain resource units may be the same. In another example, bandwidths of at least two of the M frequency domain resource units may be different. For related descriptions of the bandwidth of the frequency domain resource unit, refer to the following division method. Details are not described herein. Generally, in the frequency domain resource used to transmit the TB, channel environment information varies in different frequency domain resource units. Therefore, the frequency domain resource used to transmit the TB is divided into the M frequency domain resource units, so that the first apparatus can determine, with reference to channel environment information of different frequency domain resource units as much as possible, mapping relationships between a bit and a modulation symbol corresponding to the frequency domain resource units.

For example, a time domain resource unit shown in embodiments of this application may include one or more orthogonal frequency division multiplexing (orthogonal frequency division multiplexing, OFDM) symbols. Alternatively, the time domain resource unit may be measured in second (s), millisecond (ms), or the like. Specific duration of the time domain resource unit is not limited in embodiments of this application. In an example, time lengths (or referred to as duration) of all the M time domain resource units are the same. In another example, time lengths of at least two of the M time domain resource units may be different. For related descriptions of the duration of the time domain resource unit, refer to the following division method. Details are not described herein. Generally, in the time domain resource used to transmit the TB, channel environment information may change in different time domain resource units. Therefore, the time domain resource used to transmit the TB is divided into the M time domain resource units, so that the first apparatus can determine, with reference to channel environment information of different time domain resource units as much as possible, mapping relationships between a bit and a modulation symbol corresponding to the time domain resource units.

For example, a time-frequency resource unit shown in embodiments of this application may include one or more REs, one or more RBs, or the like.

For example, a space domain resource unit shown in embodiments of this application may include one or more space flows, or include one or more space-time flows, or the like. For descriptions of the space domain resource unit, refer to the descriptions of the frequency domain resource unit or the time domain resource unit. Details are not described herein again.

### 2. Mapping relationship between a bit and a modulation symbol (which may be referred to as a mapping relationship below for short)

The mapping relationship between a bit and a modulation symbol may be used to modulate a bit (bit) into a modulation symbol.

In an example, the mapping relationship between a bit and a modulation symbol may be a formula. For example, for QPSK, the mapping relationship between a bit and a modulation symbol may be: $d \left(i\right) = \frac{1}{\sqrt{2}} \left[\left(1-2b\left(2i\right)+j\right)\left(1-2b\left(2i+1\right)\right)\right]$.

In another example, the mapping relationship between a bit and a modulation symbol may alternatively be a correspondence. For example, for QPSK, a modulation symbol obtained through modulation of a bit 00 may be $\frac{1}{\sqrt{2}} \left(1+1j\right)$, a modulation symbol obtained through modulation of a bit 01 may be $\frac{1}{\sqrt{2}} \left(1-1j\right)$, a modulation symbol obtained through modulation of a bit 10 may be $\frac{1}{\sqrt{2}} \left(-1+1j\right)$, and a modulation symbol obtained through modulation of a bit 11 may be $\frac{1}{\sqrt{2}} \left(-1-1j\right)$.

In still another example, the mapping relationship between a bit and a modulation symbol may alternatively be corresponding modulation symbols obtained by sorting bits in a sequence of sizes. For example, for QPSK, a sequence of the modulation symbols is: $\frac{1}{\sqrt{2}} \left(1+1j\right)$, $\frac{1}{\sqrt{2}} \left(1-1j\right) , \frac{1}{\sqrt{2}} \left(-1+1j\right)$, and $\frac{1}{\sqrt{2}} \left(-1-1j\right)$.

Generally, for a modulation order, a set of all possible modulation symbols corresponding to a modulation scheme may be referred to as a constellation diagram. A quantity of all possible modulation symbols is usually a power of 2, for example, 2^{m}. Each modulation symbol may represent m-bit information, and m may also be referred to as an order of the modulation scheme, for example, a modulation order. m is a positive integer.

### 3. Channel environment information

The channel environment information may indicate at least one of a channel environment type or channel information. For example, the channel information may be a channel estimation result obtained by the first apparatus through estimation by using a parameter related to the channel environment type, or the channel environment type may determine a specific calculation manner of the channel information. For example, the channel environment type may include but is not limited to at least one of the following: a channel response, a channel response amplitude, reference signal received power (reference signal received power, RSRP), a signal-to-noise ratio (signal-to-noise ratio, SNR), a signal to interference plus noise ratio (signal to interference plus noise ratio, SINR), a channel quality indicator (channel quality indicator, CQI), a channel feature matrix, a channel covariance matrix, a channel compression representation, a channel delay spread, a channel Doppler spread, an interference status, or a quantity of paired users. With progress of the standards, another channel environment type used to calculate channel information may appear subsequently. This is not limited in embodiments of this application.

For descriptions of the channel environment information, refer to the following implementation 5. Details are not shown herein.

### 4. Artificial intelligence (artificial intelligence, AI) model

Artificial intelligence (artificial intelligence, AI) refers to intelligence represented by machines made by humans. Usually, the artificial intelligence is a technology that presents human intelligence by using a normal computer program. The artificial intelligence may be defined as a machine or a computer that simulates humans and has cognitive functions, such as learning and problem-resolving, related to human thinking. The artificial intelligence can learn from past experience, make reasonable decisions, and respond quickly. An objective of the artificial intelligence is to understand intelligence by constructing symbolic reasoning or computer programs for reasoning.

Machine learning is a way to implement the artificial intelligence, that is, to resolve problems in the artificial intelligence by using the machine learning as a means. A machine learning theory is mainly to design and analyze some algorithms that enable a computer to automatically "learn". A machine learning algorithm is an algorithm that automatically analyzes data to obtain a rule and uses the rule to predict unknown data. Because the learning algorithm involves a large quantity of statistical theories, the machine learning is particularly closely related to inferential statistics, and is also referred to as statistical learning theory.

The AI model is an algorithm or a computer program that can implement an AI function. The AI model represents a mapping relationship between an input and an output of the model. The AI model may be a neural network or another machine learning model. A neural network (neural network, NN) is a specific implementation form of machine learning. According to the general approximation theorem, the neural network can approximate any continuous function in theory, so that the neural network has a capability of learning any mapping. Therefore, the neural network can accurately perform abstract modeling for a complex high-dimension problem.

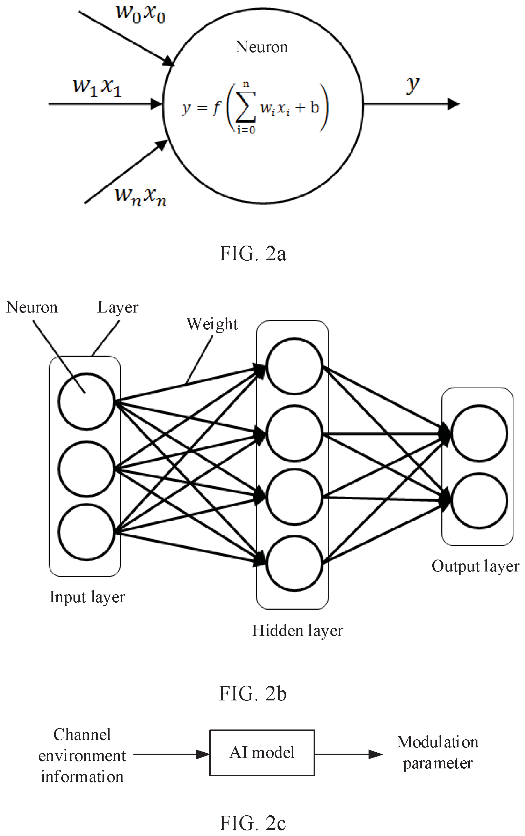

The idea of the neural network comes from a neuron structure of brain tissue. Each neuron performs a weighted summation operation on input values of the neuron, and outputs a result of the weighted summation through an activation function. FIG. 2a is a diagram of a neuron structure according to an embodiment of this application. As shown in FIG. 2a, it is assumed that an input of a neuron is *x =* [*x*₀, *x*₁, *...* , *xₙ*], weights corresponding to inputs are respectively *w* = [w, *w*₁, ... , *wₙ*], and an offset of weighted summation is b. Forms of an activation function may be diversified. Assuming that an activation function of a neuron is y = *f*(*z*) = max(0, z), an output y of the neuron may satisfy $y = f \left({\sum }_{i = 0}^{i = n} {w}_{i} ∗ {x}_{i} + b\right) = max \left(0, {\sum }_{i = 0}^{i = n} {w}_{i} ∗ {x}_{i} + b\right)$. For another example, if an activation function of a neuron is y = *f*(*z*) = z, an output y of the neuron may satisfy $y = f \left({\sum }_{i = 0}^{i = n} {w}_{i} ∗ {x}_{i} + b\right) = {\sum }_{i = 0}^{i = n} {w}_{i} ∗ {x}_{i} + b$. b may be any possible value, for example, a decimal, an integer (0, a positive integer, or a negative integer), or a complex number. Activation functions of different neurons in the neural network may be the same or different.

The neural network generally includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. FIG. 2b is a diagram of a layer relationship of a neural network according to an embodiment of this application. In a possible implementation, the neural network includes an input layer and an output layer. After performing neuron processing on a received input, the input layer of the neural network transfers a result to the output layer, and the output layer obtains an output result of the neural network. In another possible implementation, the neural network includes an input layer, a hidden layer, and an output layer. After performing neuron processing on a received input, the input layer of the neural network transfers a result to the intermediate hidden layer. The hidden layer then transfers a calculation result to the output layer or an adjacent hidden layer. Finally, the output layer obtains an output result of the neural network. One neural network may include one or more hidden layers that are sequentially connected. This is not limited in embodiments of this application. Generally, in a training process of the neural network, a loss function may be further defined. The loss function describes a gap or a difference (or a deviation) between an output value and an ideal target value of the neural network. A specific form of the loss function is not limited in embodiments of this application. The training process of the neural network is a process of adjusting a parameter of the neural network, such as a quantity of layers of the neural network, a width of the neural network, a weight of a neuron, and/or a parameter in an activation function of the neuron, to cause a value of the loss function to be less than a threshold or meet a target requirement (for example, a convergence condition). The foregoing descriptions of the AI model are merely an example, and should not be construed as a limitation on embodiments of this application.

In a possible implementation, FIG. 2c is a diagram of an AI model according to an embodiment of this application. As shown in FIG. 2c, an input of the AI model may include channel environment information. Optionally, the input of the AI model may further include a modulation order (not shown in FIG. 2c). An output of the AI model may be a modulation parameter.

In an example, the input of the AI model may include the channel environment information and the modulation order, or the input of the AI model includes the channel environment information, and the modulation parameter may include a mapping relationship between a bit and a modulation symbol.

In another example, the input of the AI model may include the channel environment information and the modulation order, or the input of the AI model may include the channel environment information, the modulation parameter may include K modulation symbols, and the K modulation symbols are all possible modulation symbols in a current modulation scheme, and respectively correspond to all possible values of L bits, where K=2^{L}. Both K and L are positive integers. A value of K may be obtained based on L.

In still another example, the input of the AI model may include the channel environment information, and the modulation parameter may include a mapping relationship between a bit and a modulation symbol (or K modulation symbols) and a modulation order.

In this embodiment of this application, the input of the AI model may be different based on content indicated by MCS information. The channel environment information shown in FIG. 2c is merely an example. For specific descriptions of the MCS information and the AI model, refer to the following descriptions. Details are not described herein.

For example, the input of the AI model may include channel environment information of a resource unit, and then a modulation parameter of the resource unit is output. Alternatively, the input of the AI model may include channel environment information of M resource units, and then a modulation parameter of each of the M resource units is output. A specific implementation of the AI model is not limited in embodiments of this application.

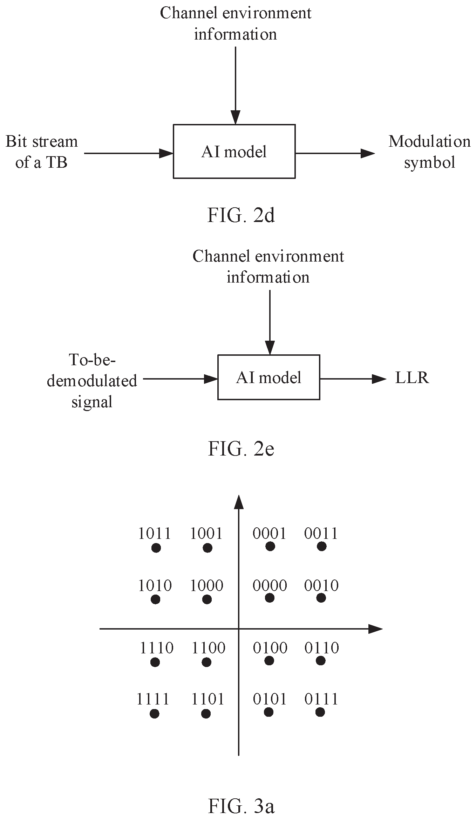

In another possible implementation, FIG. 2d is a diagram of another AI model according to an embodiment of this application. As shown in FIG. 2d, an input of the AI model may include a bit stream of a TB and channel environment information. Optionally, the input of the AI model may further include a modulation order. An output of the AI model may include a modulation symbol. At least two mapping relationships shown in embodiments of this application may be used as an intermediate parameter of the AI model, and the intermediate parameter may be used to modulate the TB. Alternatively, the AI model may not specifically predict at least two mapping relationships shown below, but directly output a modulation symbol by using the channel environment information and the bit stream of the TB. Specific execution steps of the AI model are not limited in embodiments of this application.

This application provides an apparatus. The apparatus may include an AI entity, configured to process the AI models (the AI models shown in FIG. 2c and FIG. 2d). The processing may include one or more of training, updating, monitoring, inference application, or management (for example, registration or deregistration).

The foregoing related descriptions of the AI model are applicable to a first apparatus and/or a second apparatus in this application. A difference lies in that the first apparatus is used in a modulation process, and the second apparatus is used in a demodulation process. The foregoing related descriptions of FIG. 2c are applicable to the second apparatus. Details are not described herein. FIG. 2e is a diagram of still another AI model according to an embodiment of this application. As shown in FIG. 2e, an input of the AI model may include a received signal and channel environment information. Optionally, the received signal may be a signal obtained through equalization processing, and may be referred to as an equalized signal for short. Optionally, the input of the AI model may further include a modulation order. The equalized signal shown herein may be understood as a to-be-demodulated signal obtained by a second apparatus (for example, may be a signal obtained by equalizing a received signal, or an estimation result of a modulation symbol). An output of the AI model may include a log-likelihood ratio (log-likelihood ratio, LLR) of each bit, or an estimated value of each bit. The LLR shown herein is merely an example. During specific implementation, outputs of the AI model may vary based on different demodulation schemes, which are not enumerated herein one by one. For example, the second apparatus may include an AI entity, configured to process the AI model (the AI model shown in FIG. 2e). The processing may include one or more of training, updating, monitoring, inference application, or management.

FIG. 2e shows an example in which the input of the AI model includes the to-be-demodulated signal. For example, the input of the AI model may include the received signal or the equalized signal. In other words, the second apparatus may also input, into the AI model, a signal that is equalized and received by the second apparatus and the channel environment information, and then output an LLR. Specific input content of the AI model is not limited in embodiments of this application.

The AI model shown in embodiments of this application may be implemented by using an AI entity, an AI module, or the like. A specific product form of the AI model is not limited in embodiments of this application.

In embodiments of this application, for the first apparatus, the AI model and a modulation module may be independently disposed, or the AI model and a modulation module may be integrated. A specific manner of disposing the AI model and the modulation module in the first apparatus is not limited in embodiments of this application. For the second apparatus, the AI model and a demodulation module may be independently disposed, or the AI model and a demodulation module may be integrated. A specific manner of disposing the AI model and the demodulation module in the second apparatus is not limited in embodiments of this application.

For ease of description, the following uses an example in which the AI model obtains at least two mapping relationships shown below for description. However, this should not be construed as a limitation on embodiments of this application.

### 5. Modulation and demodulation

Modulation is to map a discrete bit stream including 0 and 1 into modulation symbols in a specific manner for signal sending. Common modulation schemes include but are not limited to amplitude shift keying modulation (amplitude shift keying modulation, ASK), frequency shift keying modulation (frequency shift keying modulation, FSK), phase shift keying modulation (phase shift keying modulation, PSK), and quadrature amplitude modulation (quadrature amplitude modulation, QAM).

The specific manner may be determined by using a mapping relationship between a bit and a modulation symbol. The mapping relationship may also be referred to as a mapping relationship from an information bit to a modulation symbol, a mapping relationship between an information bit and a modulation symbol, a mapping relationship between a bit and a complex modulation symbol (or a complex number), or the like. A specific name of the mapping relationship is not limited in embodiments of this application. For example, one resource element (resource element, RE) may be used to transmit one modulation symbol. For example, the modulation symbol may be understood as a signal (for example, a complex number) carried on one RE.

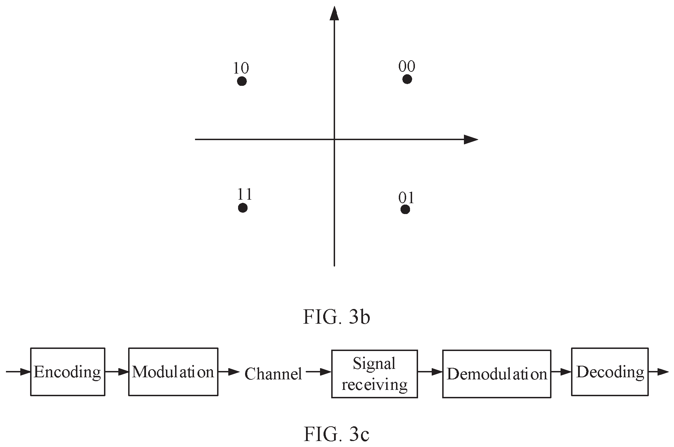

Generally, for a modulation order, a set of all possible modulation symbols corresponding to a modulation scheme may be referred to as a constellation diagram. A quantity of all possible modulation symbols is usually a power of 2, for example, 2^{m}. Each modulation symbol may represent m-bit information, and m may also be referred to as an order of the modulation scheme, for example, a modulation order. m is a positive integer. For descriptions of m, refer to the foregoing descriptions of L. FIG. 3a is a diagram of a 16QAM mapping relationship according to an embodiment of this application. As shown in FIG. 3a, each modulation symbol may correspond to 4-bit information. FIG. 3b is a diagram of a QPSK mapping relationship according to an embodiment of this application. As shown in FIG. 3b, each modulation symbol may correspond to 2-bit information. For example, the diagram shown in FIG. 3a or FIG. 3b may also be referred to as a constellation diagram, and one constellation point in the constellation diagram may one to one correspond to a bit. A mapping relationship between a bit and a modulation symbol may be intuitively represented by using the constellation diagram.

An example is used to describe a relationship between a mapping relationship, a modulation order, and a modulation scheme. For example, when the modulation scheme is QAM, a value of a modulation order m corresponding to the modulation scheme may be any one of 4, 6, 8, and 10. When m=4, the mapping relationship may be a 16QAM mapping relationship. In this case, one modulation symbol may correspond to four information bits. As shown in FIG. 3a, a bit 1011 may be mapped to a modulation symbol in an upper left corner. When m=8, the mapping relationship may be a 256QAM mapping relationship. In this case, one modulation symbol may correspond to eight information bits. It may be understood that, in some implementations, the mapping relationship between a bit and a modulation symbol may also be referred to as a modulation scheme. This is not limited in embodiments of this application.

Demodulation is a reverse process of modulation, that is, to restore a received signal back into a bit stream. For example, a demodulator may be classified into a hard decision demodulator and a soft decision demodulator. An output of the hard decision demodulator is 0 or 1, and an output of the soft decision demodulator is an LLR. The LLR is a logarithm of a quotient of a probability that one bit is 1 and a probability that the bit is 0, for example, log(p(u=1)/p(u=0)), where u represents a value of one bit. FIG. 3c is a diagram of a main procedure of a communication system according to an embodiment of this application. For example, locations of the modulation and the demodulation in the main procedure of the communication system may be shown in FIG. 3c. Certainly, the procedure shown in FIG. 3c is merely an example, and should not be construed as a limitation on embodiments of this application. For example, during specific implementation, in a signal sending process, a transmit end may further perform operations such as rate matching, frequency conversion, and encryption. Other signal processing performed by both communication parties is not enumerated one by one herein.

In a new radio (new radio, NR) system, a mainly used modulation scheme is binary phase shift keying (binary PSK, BPSK) modulation, quadrature phase shift keying (quadrature PSK, QPSK), or nQAM (for example, a value of n may be 16, 64, 256, or 1024). For a TB, regardless of which mapping relationship is used, a mapping relationship corresponding to the TB is regular and fixed. The regular shown herein means that different modulation symbols in a constellation diagram are evenly distributed in a regular shape like a square. Fixed herein means that a mapping relationship under each modulation order is fixed, and is irrelevant to a channel environment used to transmit a TB. A regular constellation diagram leads to non-optimal geometric distribution of modulation symbols in the constellation diagram, and there is a gap (gap) between an amount of information that can be transmitted by using the regular constellation diagram and a Shannon capacity under white Gaussian noise (white Gaussian noise, AWGN). Regardless of which channel environment is used to transmit a TB, a mapping relationship of the TB is fixed. As a result, a gap between an amount of information that can be transmitted by using a regular constellation diagram and a Shannon capacity is larger in a fading channel. The gap affects demodulation performance. Therefore, a same and fixed mapping relationship is used for a same TB, causing low demodulation performance.

In view of this, embodiments of this application provide a modulation method, a demodulation method, and an apparatus, to improve demodulation performance. For example, in the method provided in embodiments of this application, a mapping relationship that matches channel environment information may be designed with reference to the channel environment information. For example, a resource used to transmit a TB may be divided into M resource units, and at least two of the M resource units may correspond to different mapping relationships. The resource is divided into the M resource units, and different mapping relationships may be respectively designed for different channels, so that modulation is performed in consideration of impact of channel environment information, and demodulation performance can be effectively improved. Generally, when a signal is transmitted on different resource units, responses of the signal through channels are different, that is, channel environment information is different. Therefore, different mapping relationships are used for different channel environment information, so that demodulation performance can be effectively improved.

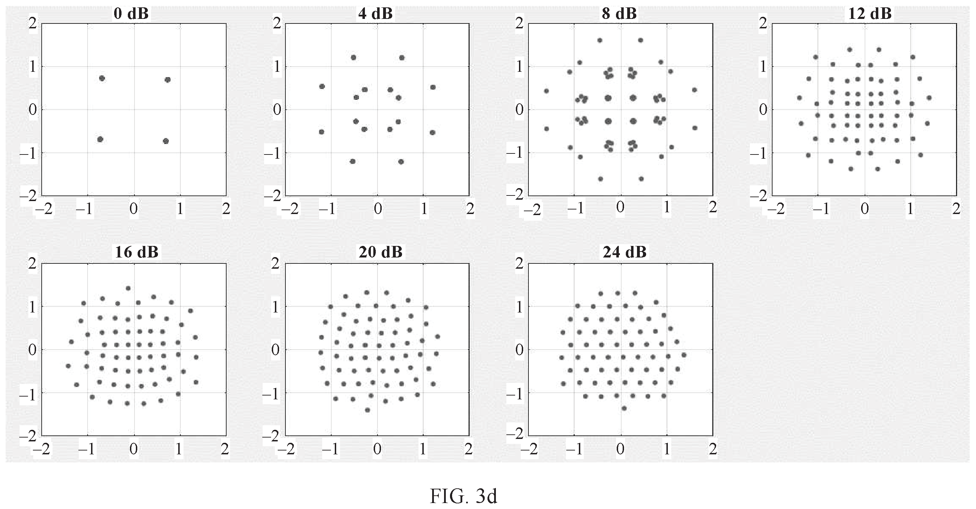

For example, FIG. 3d is a diagram of modulation schemes under different signal-to-noise ratios according to an embodiment of this application. FIG. 3d shows different modulation schemes under different signal-to-noise ratios when m=6. In other words, FIG. 3d shows different mapping relationships between a bit and a modulation symbol under a same modulation order. It can be learned from FIG. 3d that when a signal-to-noise ratio is low, modulation symbols are centralized. For example, when the signal-to-noise ratio is 0 dB, 64 modulation symbols may be aggregated into four possible values. When a signal-to-noise ratio is high, modulation symbols are scattered gradually. When the signal-to-noise ratio is low, a received signal may be far away from an original modulation symbol and close to another modulation symbol, so that the received signal is determined as another modulation symbol during demodulation, resulting in an error in demodulation. Therefore, when the signal-to-noise ratio is low, a distance (generally referred to as a Euclidean distance) between modulation symbols should be increased. Therefore, different mapping relationships may be used for different channel environment information. The mapping relationships are determined with reference to channel environment information of different resource units, so that demodulation performance can be effectively improved. A unit of the signal-to-noise ratio in FIG. 3d is decibel (dB). Generally, a higher signal-to-noise ratio indicates better channel quality.

In embodiments of this application, a resource used to transmit a TB may be divided into M resource units. The M resource units may also be referred to as M resource units, M sub-resources, or the like. A specific name of the resource unit is not limited in embodiments of this application.

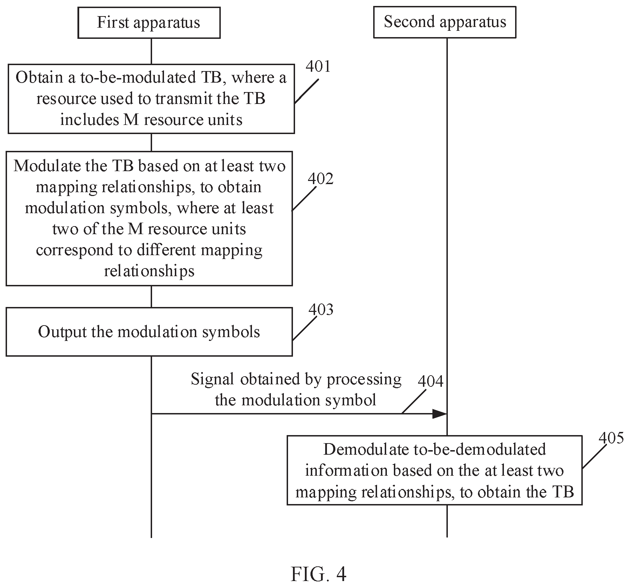

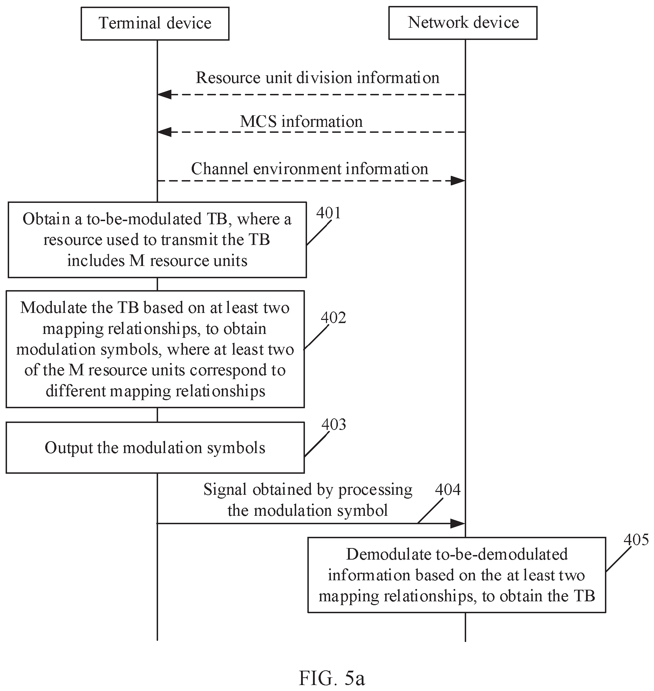

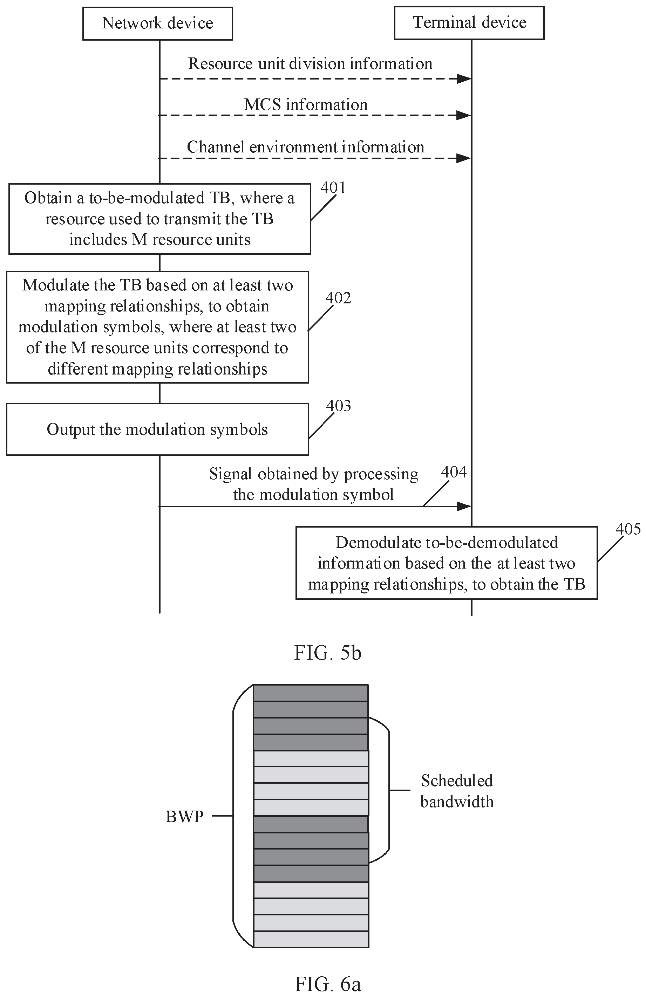

FIG. 4 is a schematic flowchart of a modulation method and a demodulation method according to an embodiment of this application. For specific descriptions of a first apparatus and a second apparatus, refer to FIG. 1a or FIG. 1b. Details are not described herein again. For related descriptions of a mapping relationship and a modulation order in the following descriptions, refer to the related descriptions and the like of the foregoing term "modulation and demodulation". Details are not described below again. In the following descriptions, FIG. 5a is shown by using an example in which the first apparatus is a terminal device and the second apparatus is a network device, and FIG. 5b is shown by using an example in which the first apparatus is a network device and the second apparatus is a terminal device. For specific descriptions of FIG. 5a and FIG. 5b, refer to FIG. 4. Details are not described below again.

401: The first apparatus obtains a to-be-modulated TB, where a resource used to transmit the TB includes M resource units.

The TB may be understood as a basic data unit exchanged between a layer 1 and a layer 2. For example, a basic data unit sent from a MAC layer to a physical layer may be a TB. For example, a transport block (transmit block, TB) may include a plurality of code block groups (code block groups, CBGs). For example, a TB may include a plurality of code blocks (code blocks, CBs). Considering a relationship between the TB and the CBGs or a relationship between the TB and the CBs, the method provided in this embodiment of this application is also applicable to a scenario of a plurality of CBGs or a plurality of CBs. In other words, the TB in this embodiment of this application may be replaced with CBGs or CBs. The plurality of CBGs belong to a same TB, or the plurality of CBs belong to a same TB. With progress of the standards, other types of basic data units for exchange between the layer 1 and the layer 2 may also appear subsequently. This is not limited in embodiments of this application.

For example, the first apparatus may generate the TB by using a process like encoding, rate matching, or code block concatenation. For a specific process of generating the TB, refer to a related standard, protocol, or the like. Details are not described in this embodiment of this application.

For descriptions of the resource unit, refer to the descriptions in the foregoing term 1. Details are not described herein again.

**A method for obtaining M frequency domain resource units through division is described below.**

Before dividing a frequency domain resource used to transmit a TB into M frequency domain resource units, the first apparatus may first learn of a bandwidth of each frequency domain resource unit and a start location of each frequency domain resource unit. The method for obtaining M frequency domain resource units through division is described below in terms of a bandwidth and a location.

In a possible implementation 1, bandwidths of all the M frequency domain resource units are the same. In other words, each frequency domain resource unit is obtained through even division. Alternatively, bandwidths of at least M-1 frequency domain resource units in the M frequency domain resource units are the same. In other words, a bandwidth of the frequency domain resource used to transmit the TB may not be an integer multiple of the bandwidth of the frequency domain resource unit. In this case, a bandwidth of one of the M frequency domain resource units may be allowed to be less than bandwidths of other frequency domain resource units.

In an example 1A, resource unit division information may indicate a bandwidth of one frequency domain resource unit and a start location of a 1^{st} frequency domain resource unit.

Because bandwidths of all the frequency domain resource units are the same, the resource unit division information only needs to indicate a bandwidth of one frequency domain resource unit. For example, the bandwidth of the frequency domain resource unit may be configured by the network device, or may be predefined in a protocol. For example, that the bandwidth of the frequency domain resource unit is any one of {3 RBs, 4 RBs, 5 RBs, 6 RBs} may be predefined in the protocol. In this case, the resource unit division information may indicate the bandwidth of the frequency domain resource unit by carrying an index value.

For example, the start location of the 1^{st} frequency domain resource unit indicated by the resource unit division information may be a start location of a bandwidth part (bandwidth part, BWP) in which the resource used to transmit the TB is located. In this case, the 1^{st} frequency domain resource unit is a 1^{st} frequency domain resource unit in a plurality of frequency domain resource units obtained by dividing the BWP based on the bandwidth by using the start location of the BWP as a start location. The plurality of frequency domain resource units include the M frequency domain resource units. A configuration that exceeds a range of the BWP is an invalid configuration. For another example, the start location of the 1^{st} frequency domain resource unit indicated by the resource unit division information may be a start location of the frequency domain resource used to transmit the TB (namely, a start location of a scheduled bandwidth). In this case, the 1^{st} frequency domain resource unit is a 1^{st} frequency domain resource unit in the M frequency domain resource units. A configuration that exceeds the scheduled bandwidth is an invalid configuration. Herein, that the resource unit division information indicates the start location of the 1^{st} frequency domain resource unit is merely an example. For example, the resource unit division information may also indicate a start location, an end location, or the like of another frequency domain resource unit. For a procedure of exchanging the resource unit division information, refer to FIG. 5a or FIG. 5b. Details are not described herein. The related descriptions of the 1^{st} frequency domain resource unit herein are also applicable to the following example 1B.

In another example 1B, resource unit division information may indicate a bandwidth of one frequency domain resource unit. In this case, a start location of a 1^{st} frequency domain resource unit may be predefined in a protocol.

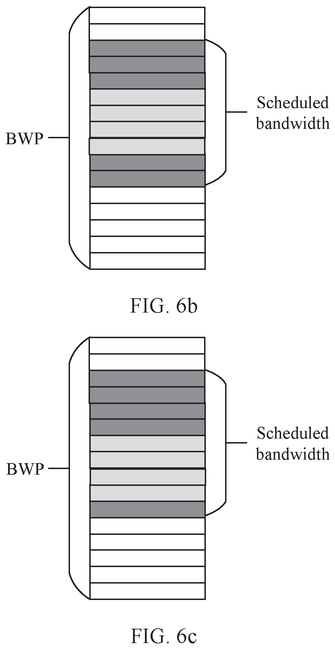

For example, the start location of the 1^{st} frequency domain resource unit may be determined based on a start location of a BWP in which the resource used to transmit the TB is located. For example, that the start location of the 1^{st} frequency domain resource unit is the start location of the BWP in which the resource is located may be predefined in the protocol. FIG. 6a is a diagram of frequency domain resource division according to an embodiment of this application. In FIG. 6a, a bandwidth of a BWP is 16 RBs, and a bandwidth of each frequency domain resource unit is 4 RBs. The BWP may include four frequency domain resource units. For example, a frequency domain resource used to transmit a TB starts from a 3^{rd} RB, and a scheduled bandwidth is 9 RBs. A start location of the BWP is used as a reference. In this case, the scheduled bandwidth may include three frequency domain resource units, and bandwidths of the three frequency domain resource units are respectively 2 RBs, 4 RBs, and 3 RBs. Certainly, the start location of the 1^{st} frequency domain resource unit may alternatively be determined based on the start location of the BWP in which the resource is located and an offset. As shown in FIG. 6b, if the offset is 1 RB, the scheduled bandwidth may include three frequency domain resource units, and bandwidths of the three frequency domain resource units are respectively 3 RBs, 4 RBs, and 2 RBs. For example, the offset may be less than or equal to an offset between the start location of the BWP and a start location of the scheduled bandwidth.

For another example, the start location of the 1^{st} frequency domain resource unit may be determined based on a start location of a frequency domain resource used to transmit the TB. For example, that the start location of the 1^{st} frequency domain resource unit is the start location of the frequency domain resource may be defined in the protocol. FIG. 6c is a diagram of frequency domain resource division according to an embodiment of this application. In FIG. 6c, a bandwidth of a BWP is 16 RBs, a bandwidth of a frequency domain resource unit is 4 RBs, and a scheduled bandwidth is 9 RBs. A start location of the scheduled bandwidth is used as a reference. In this case, the scheduled bandwidth may include three frequency domain resource units, and bandwidths of the three frequency domain resource units are respectively 4 RBs, 4 RBs, and 1 RB.

Certainly, for the foregoing example 1A and example 1B, when bandwidths of all frequency domain resource units are the same, the resource unit division information may also indicate the bandwidths of all the frequency domain resource units, and the bandwidths of all the frequency domain resource units are the same. For a procedure of exchanging the resource unit division information, refer to FIG. 5a or FIG. 5b. Details are not described herein.

In still another example 1C, both a bandwidth of a frequency domain resource unit and a start location of a 1^{st} frequency domain resource unit are predefined in a protocol. For example, the bandwidth of the frequency domain resource unit is defined as 4 RBs or 3 RBs in the protocol. For related descriptions of the start location of the 1^{st} frequency domain resource unit, refer to the foregoing example 1A or example 1B. Details are not described herein again.

In another possible implementation 2, bandwidths of the M frequency domain resource units may be obtained through uneven division. For example, bandwidths of at least two of the M frequency domain resource units may be different. When bandwidths of two of the M frequency domain resource units are different, different bandwidths of the two frequency domain resource units shown in the implementation 2 are not caused by a relationship between a bandwidth of a frequency domain resource used to transmit the TB and the bandwidth of the frequency domain resource unit, but are caused by the method of uneven division.

In an example 2A, resource unit division information may indicate a bandwidth of each frequency domain resource unit and a start location of a 1^{st} frequency domain resource unit. For example, the resource unit division information may indicate M bandwidths and indicate that the start location is a start location of a BWP or a start location of a scheduled bandwidth. A configuration that exceeds a range of the BWP is an invalid configuration. A configuration that exceeds a range of the scheduled bandwidth is an invalid configuration. For example, the resource unit division information indicates a plurality of bandwidths and indicates that the start location is a start location of a BWP. In this case, when the BWP is divided into resource units, a sum of the plurality of indicated bandwidths may exceed the range of the BWP. Therefore, a configuration that exceeds the range of the BWP is an invalid configuration. A configuration within the range of the BWP is a valid configuration. For related descriptions of the example 2A, refer to the foregoing example 1A and the like. Details are not described herein again.

In another example 2B, resource unit division information may indicate a bandwidth of each frequency domain resource unit. In this case, a start location of a 1^{st} frequency domain resource unit may be predefined in a protocol. For related descriptions of the example 2B, refer to the foregoing example 1B and the like. Details are not described herein again.

In still another example 2C, resource unit division information may indicate a start location of each frequency domain resource unit. In this case, a bandwidth of each frequency domain resource unit is a start location of a next frequency domain resource unit minus a start location of the frequency domain resource unit. For example, when a start location of a 1^{st} frequency domain resource unit is predefined in a protocol, the resource unit division information may indicate start locations of M-1 frequency domain resource units in the M frequency domain resource units other than the 1^{st} frequency domain resource unit.

For the example 2A to the example 2C, for a procedure of exchanging the resource unit division information, refer to FIG. 5a or FIG. 5b. Details are not described herein.

In still another example 2D, both a bandwidth of each frequency domain resource unit and a start location of a 1^{st} frequency domain resource unit are predefined in a protocol. For example, a value of M and bandwidths corresponding to M are defined in the protocol. For related descriptions of the start location of the 1^{st} frequency domain resource unit, refer to the foregoing example 1A, example 1B, or the like. Details are not described herein again.

A size of a bandwidth is indicated above by using an RB as an example. However, during specific implementation, the size of the bandwidth may alternatively be measured or indicated by using a unit like a subcarrier or an RE, which is not enumerated herein.

In this embodiment of this application, "1" in the implementation 1, "2" in the implementation 2, "1A" in the example 1A, "2A" in the example 2A, and the like are used to distinguish between different examples and facilitate subsequent reference.

**A method for obtaining M time domain resource units through division is described below.**

In a possible implementation, time lengths of all M time domain resource units are the same. In other words, each time domain resource unit is obtained through even division. Alternatively, time lengths of at least M-1 time domain resource units in M time domain resource units are the same.

In an example, resource unit division information may indicate a time length of one time domain resource unit and a start location of a 1^{st} time domain resource unit. The start location of the 1^{st} time domain resource unit shown herein may be a start location of a time domain resource used to transmit the TB. For other descriptions of this example, refer to the foregoing example 1A. Details are not described herein again.

In another example, resource unit division information may indicate a time length of one time domain resource unit. In this case, a start location of a 1^{st} time domain resource unit may be predefined in a protocol. For related descriptions of this example, refer to the foregoing example 1B. Details are not described herein again.

In still another example, both a time length of a time domain resource unit and a start location of a 1^{st} time domain resource unit are predefined in a protocol. For related descriptions of this example, refer to the foregoing example 1C. Details are not described herein again.

In another possible implementation, time lengths of M time domain resource units may be obtained through uneven division. For example, time lengths of at least two of the M time domain resource units may be different.

In an example, resource unit division information may indicate a time length of each time domain resource unit and a start location of a 1^{st} time domain resource unit. For related descriptions of this example, refer to the foregoing example 2A. Details are not described herein again.

In another example, resource unit division information may indicate a time length of each time domain resource unit. In this case, a start location of a 1^{st} time domain resource unit may be predefined in a protocol.

In still another example, resource unit division information may indicate a start location of each time domain resource unit. In this case, a time length of each time domain resource unit is a start location of a next time domain resource unit minus a start location of the time domain resource unit. For example, when a start location of a 1^{st} time domain resource unit is predefined in a protocol, the resource unit division information may indicate start locations of M-1 time domain resource units in the M time domain resource units other than the 1^{st} time domain resource unit.

In still another example, a time length of each time domain resource unit is predefined in a protocol. For example, a value of M and time lengths corresponding to M are defined in the protocol.

For related descriptions of the M time domain resource units, refer to the foregoing descriptions of the M frequency domain resource units. Details are not described herein again.

In this embodiment of this application, a unit for measuring the time length may include but is not limited to any one of a slot (slot), a transmission time interval (transmission time interval, TTI), a millisecond (ms), a subframe, and an OFDM symbol.

For a method for obtaining M space domain resource units through division, refer to the foregoing method for obtaining M frequency domain resource units through division or the foregoing method for obtaining M time domain resource units through division. Details are not described herein again.

**The procedure of exchanging the foregoing resource unit division information is described below.**

In an example, as shown in FIG. 5a, the first apparatus may include a terminal device, a chip used in the terminal device, or the like, and the second apparatus may include a network device, a chip used in the network device, or the like.

In another example, as shown in FIG. 5b, the first apparatus may include a network device, a chip used in the network device, or the like, and the second apparatus may include a terminal device, a chip used in the terminal device, or the like.

In a possible implementation, locations of the M resource units may be configured. As shown in FIG. 5a and FIG. 5b, the method shown in this embodiment of this application may further include:

The network device sends resource unit division information to the terminal device, and correspondingly, the terminal device receives the resource unit division information. The resource unit division information indicates the locations of the M resource units. Alternatively, the resource unit division information may indicate division information of the M resource units. Alternatively, the resource unit division information may indicate locations of the M frequency domain resource units in the frequency domain resource. Alternatively, the resource unit division information may indicate locations of the M time domain resource units in the time domain resource. Alternatively, the resource unit division information may indicate locations of the M space domain resource units in the space domain resource. For related descriptions of the resource unit division information, refer to the foregoing implementations. Details are not described herein again.

The resource unit division information may be specific to a UE (for example, UE specific), specific to a group of UEs (for example, group UE specific), specific to all UEs in a specific state in a cell (for example, cell specific), or specific to all UEs in a cell (for example, cell specific). For example, the resource unit division information may be carried in any one of the following signaling: radio resource control (radio resource control, RRC), medium access control (medium access control, MAC)-control element (MAC control element, MAC CE), or downlink control information (downlink control information, DCI).

In another possible implementation, the first apparatus sends resource unit division information to the second apparatus, and correspondingly, the second apparatus receives the resource unit division information. In this case, regardless of whether the first apparatus is the terminal device or the network device, the first apparatus may send the resource unit division information to the second apparatus.

In this embodiment of this application, the resource unit division information may further include index information. The index information may indicate an index of each resource unit. Alternatively, an index is configured for each resource unit according to a specific rule by default. For example, indexes of resource units may be sequentially configured in ascending order of frequencies starting from a start location. For example, as shown in FIG. 6a, bandwidths of three frequency domain resource units are respectively 3 RBs, 4 RBs, and 2 RBs. In ascending order of frequencies, indexes of the three frequency domain resource units may be sequentially 1, 2, and 3 (which is merely an example). A manner of setting the index of each resource unit is not limited in embodiments of this application.

In this embodiment of this application, the resource unit division information may also have a validity period. For example, a division manner indicated by the resource unit division information may take effect in a period of time. For example, if the resource unit division information is carried in the DCI, the resource unit division information may take effect for current scheduling. For another example, the resource unit division information may further carry validity duration, and the validity duration may indicate validity duration of the resource unit division information. For another example, before new resource unit division information is received, both communication parties may consider by default that the old resource unit division information is always valid. Herein, related descriptions of the validity period of the resource unit division information are applicable to the foregoing implementations.

402: The first apparatus modulates the TB based on at least two mapping relationships, to obtain modulation symbols. At least two of the M resource units correspond to different mapping relationships.

Corresponding mapping relationships in each resource unit are the same. For example, a same mapping relationship may be used for all REs in one resource unit to modulate information bits on the REs. For example, if the at least two resource units include a first resource unit and a second resource unit, a same first mapping relationship may be used for all REs in the first resource unit to modulate information bits on the REs, and a same second mapping relationship may be used for all REs in the second resource unit to modulate information bits on the REs. The first mapping relationship is different from the second mapping relationship. A modulation order corresponding to the first mapping relationship may be the same as or different from a modulation order corresponding to the second mapping relationship.

In this embodiment of this application, the at least two of the M resource units correspond to different mapping relationships because the at least two resource units correspond to different channel environment information. Because channel environment information corresponding to the first resource unit is different from channel environment information corresponding to the second resource unit, different mapping relationships are used for the first resource unit and the second resource unit. Therefore, different mapping relationships are used for different channel environment information, and the mapping relationships can better match the channel environment information, so that demodulation performance is improved.

In an example, as shown in FIG. 5a, the first apparatus may include the terminal device, and the second apparatus may include the network device.

In another example, as shown in FIG. 5b, the first apparatus may include the network device, and the second apparatus may include the terminal device.

As shown in FIG. 5a and FIG. 5b, the method shown in this embodiment of this application may further include:

The network device sends MCS information to the terminal device, and correspondingly, the terminal device receives the MCS information. The MCS information may indicate at least one of the following: an encoding code rate of the TB, the at least two mapping relationships, a modulation order corresponding to each of the at least two mapping relationships, and a resource unit corresponding to each mapping relationship. Alternatively, the MCS information may indicate at least one of the following: an encoding code rate of the TB, a mapping relationship corresponding to each of the M resource units, and a modulation order of each mapping relationship. Content indicated by the MCS information may vary based on different implementations of the at least two mapping relationships. Therefore, for specific descriptions of the MCS information, refer to the following descriptions of the at least two mapping relationships. Details are not described herein.

For example, as shown in FIG. 5a and FIG. 5b, the method shown in this embodiment of this application may further include: The first apparatus sends channel environment information to the second apparatus, and the second apparatus receives the channel environment information. The channel environment information may be used to determine the at least two mapping relationships, or may be used to determine the at least two mapping relationships and modulation orders. For descriptions of the channel environment information, refer to the following implementation 5. Details are not described herein.

403: The first apparatus outputs the modulation symbols.

404: The first apparatus sends a signal obtained by processing the modulation symbol.

Correspondingly, the second apparatus receives the signal, and obtains to-be-demodulated information based on the signal.

For example, the modulation symbol may be output from a modulation module (for example, a modulator). After obtaining the modulation symbol, the first apparatus may further perform other processing (for example, frequency conversion processing or radio frequency processing) on the modulation symbol, and then transmit, through a channel, the signal obtained through processing. The second apparatus receives the signal transmitted through the channel. Then, the second apparatus performs processing (inverse processing corresponding to the other processing) on the signal to obtain the to-be-demodulated information of the modulation symbol.

405: The second apparatus demodulates the to-be-demodulated information based on the at least two mapping relationships, to obtain a TB.

In an example, with reference to FIG. 2c, the second apparatus may demodulate the to-be-demodulated information based on the at least two mapping relationships. For example, the second apparatus may demodulate the to-be-demodulated information based on M time domain resource units included in a time domain resource used to transmit the TB and a mapping relationship corresponding to each time domain resource unit. For example, the second apparatus may demodulate the to-be-demodulated information based on M frequency domain resource units included in a frequency domain resource used to transmit the TB and a mapping relationship corresponding to each frequency domain resource unit. For example, the second apparatus may demodulate the to-be-demodulated information based on M time-frequency resource units and a mapping relationship corresponding to each time-frequency resource unit.

In another example, with reference to FIG. 2e, the second apparatus may directly input the to-be-demodulated information into an AI model, and output an LLR of each bit. For related descriptions of the at least two mapping relationships, refer to the following descriptions. Details are not described herein. For ease of description, when some examples are used below, an example in which a quantity of the at least two mapping relationships is E mapping relationships is used for description. E is an integer less than or equal to M and greater than or equal to 2. There is no same mapping relationship in the E mapping relationships shown herein. For example, each of the M resource units may correspond to a mapping relationship, and the M resource units correspond to M mapping relationships. When all the M resource units correspond to different mapping relationships, M=E. When two of the M resource units correspond to a same mapping relationship, E=M-1. A relationship between M and E is not enumerated one by one herein.

For ease of understanding, in this embodiment of this application, different letter parameters represent different meanings. For example, M represents a quantity of time domain resource units or a quantity of frequency domain resource units, E represents a quantity of different mapping relationships in mapping relationships corresponding to the M resource units, and R represents a code rate. However, the letter parameters shown in embodiments of this application are merely an example, and should not be construed as a limitation on embodiments of this application.

In this embodiment of this application, step 402 and step 403 may be implemented by a modulation module, and step 405 may be implemented by a demodulation module. During specific implementation, the method shown in FIG. 4 may be further divided into a modulation method or a demodulation method. The method shown in FIG. 4 may be divided into a modulation method including step 402 and step 403, or a demodulation method including step 405. In this case, the first apparatus may include a modulation module (or referred to as a modulator or the like), and the second apparatus may include a demodulation module (or referred to as a demodulator or the like). Optionally, in addition to the modulation module, the first apparatus may further include an obtaining module. The obtaining module may be configured to obtain the TB and the like. Optionally, the first apparatus may further include an AI model. Optionally, in addition to the demodulation module, the second apparatus may further include an obtaining module. The obtaining module may be configured to obtain the to-be-demodulated information. Optionally, the second apparatus may further include an AI model. For related descriptions of the AI model, refer to the foregoing descriptions in FIG. 2a to FIG. 2e, or refer to the following descriptions. Details are not described herein again.

In this embodiment of this application, the first apparatus may match different mapping relationships with reference to different resource units. For example, channel environment information of at least two of the M resource units may be different. Therefore, the at least two resource units correspond to different mapping relationships, so that the channel environment information can be better matched, thereby improving demodulation performance.

**The at least two mapping relationships and the MCS information in embodiments of this application are described below.**

**In a possible implementation 3,** a mapping relationship set corresponding to a modulation order of each of the at least two mapping relationships is predefined in a protocol. Each of the at least two mapping relationships is included in the mapping relationship set corresponding to the modulation order of each mapping relationship.

The mapping relationship set is a set of different mapping relationships under a modulation order, a set of different mapping relationships in a modulation scheme, or a set of different mapping relationships in a modulation scheme under a modulation order. For example, the mapping relationship set corresponding to the modulation order may also be referred to as a plurality of groups of constellation sets corresponding to the modulation order. For example, a group of constellation sets refers to all modulation symbols in a same constellation diagram and a mapping relationship between a modulation symbol and a bit. Certainly, one modulation order may alternatively correspond to one mapping relationship. Therefore, the mapping relationship set may include one mapping relationship, or may include a plurality of mapping relationships. In other words, one modulation order may correspond to one group of constellation sets, or may correspond to a plurality of groups of constellation sets.

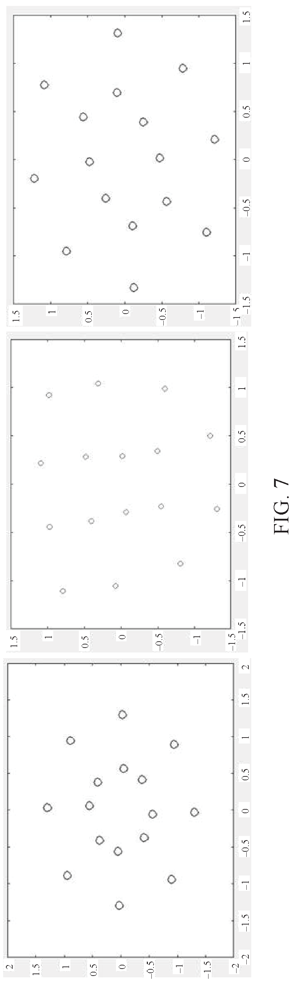

Mapping relationship sets corresponding to different modulation orders may be predefined in the protocol. For example, a plurality of mapping relationships corresponding to a first modulation order and a plurality of mapping relationships corresponding to a second modulation order may be predefined in the protocol. The first modulation order is different from the second modulation order. For example, the modulation order is 4-order modulation, and a mapping relationship set corresponding to the 4-order modulation may be predefined in the protocol. FIG. 7 is a diagram of a mapping relationship set according to an embodiment of this application. As shown in FIG. 7, the 4-order modulation may correspond to three mapping relationships. Certainly, the mapping relationships shown in FIG. 7 are merely an example. During specific implementation, the 4-order modulation may alternatively correspond to another type of mapping relationship, or the 4-order modulation may alternatively correspond to more or fewer mapping relationships. This is not limited in embodiments of this application. A quantity of modulation symbols in each mapping relationship shown in FIG. 7 is merely an example, and should not be construed as a limitation on embodiments of this application.

In an example 3A, the at least two mapping relationships have a same modulation order. For example, the modulation order of the at least two mapping relationships is a first modulation order, and the at least two mapping relationships may be mapping relationships in a mapping relationship set corresponding to the first modulation order.

In another example 3B, all the at least two mapping relationships have different modulation orders. For example, the at least two mapping relationships include a first mapping relationship. In this case, the first mapping relationship may be one in a mapping relationship set that corresponds to a first modulation order and that is defined in a protocol. For another example, the at least two mapping relationships further include a second mapping relationship. In this case, the second mapping relationship may be one in a mapping relationship set that corresponds to a second modulation order and that is defined in a protocol.

In still another example 3C, if a quantity of mapping relationships in the at least two mapping relationships is E, N mapping relationships in the E mapping relationships may have a same modulation order. E is a positive integer greater than N. N is an integer greater than or equal to 2. For ease of description, when a specific example is used below, an example in which a quantity of mapping relationships in the at least two mapping relationships is E is used for description.

In this embodiment of this application, the mapping relationship set corresponding to the modulation order is predefined in the protocol, so that signaling overheads caused by configuring the modulation order and the mapping relationship can be reduced.

**In another possible implementation 4,** a mapping relationship set corresponding to a modulation order of each of the at least two mapping relationships is configured. Each of the at least two mapping relationships is included in the mapping relationship set corresponding to the modulation order of each mapping relationship. For related descriptions of the mapping relationship set, refer to the descriptions of the foregoing implementation 3. Details are not described herein again.

The network device may configure mapping relationship sets corresponding to different modulation orders. For example, the network device may configure a mapping relationship set corresponding to a first modulation order and a plurality of mapping relationship sets corresponding to a second modulation order. For example, the network device may determine, by using an AI model, a mapping relationship set corresponding to a modulation order, where an input of the AI model may include channel environment information. For related descriptions of the modulation order, the mapping relationship, and the like, refer to the descriptions of FIG. 7 in the foregoing implementation 3, the descriptions in the example 3A to the example 3C, and the like. Details are not described herein again. For related descriptions of determining, by using the AI model, the mapping relationship set corresponding to the modulation order, refer to descriptions in the following implementation 5.

For example, the network device may send configuration information to the terminal device, where the configuration information may be used to configure the mapping relationship set corresponding to the modulation order. The configuration information includes the mapping relationship set corresponding to the modulation order of each of the at least two mapping relationships. For example, the at least two mapping relationships include a first mapping relationship, the configuration information may include a mapping relationship set corresponding to a modulation order of the first mapping relationship, and the mapping relationship set includes the first mapping relationship. For example, a mapping relationship 1 corresponding to a modulation order 2 is $\frac{1}{\sqrt{2}} \left(1+1j\right) , \frac{1}{\sqrt{2}} \left(1-1j\right) , \frac{1}{\sqrt{2}} \left(-1+1j\right) , \frac{1}{\sqrt{2}} \left(-1-1j\right)$. A mapping relationship 2 corresponding to a modulation order 2 is 0.0194+1.1492j, 0.9198-0.3813j, 0.9542+0.3876j, -0.0107-0.8249j. For example, the first mapping relationship may be represented in a sequence of modulation symbols. For example, the modulation symbols may be sequentially sorted in ascending order of corresponding bits. 4-order modulation is used as an example. A bit corresponding to a 1^{st} modulation symbol may be 0000, a bit corresponding to a 2^{nd} modulation symbol may be 0001, a bit corresponding to a 3^{rd} modulation symbol may be 0010, and so on. Certainly, the sequence shown herein is merely an example. A specific sequence from bits to modulation symbols is not limited in embodiments of this application.

The configuration information may be specific to a UE (for example, UE specific), specific to a group of UEs (for example, group UE specific), specific to all UEs in a specific state in a cell (for example, cell specific), or specific to all UEs in a cell (for example, cell specific). For example, if the channel environment information input into the AI model is channel environment information between the network device and a UE, the configuration information may be specific to the UE. For another example, if the channel environment information is channel environment information between the network device and a group of UEs, the configuration information may be specific to the group of UEs, and the like, which is not enumerated one by one herein. For related descriptions of the channel environment information, refer to descriptions of the following implementation 5.

A frequency at which the network device sends the configuration information is not limited in embodiments of this application. In an example, after the terminal device completes initial access, the network device may configure, for the terminal device, mapping relationship sets corresponding to different modulation orders. A manner in which the network device pre-configures the mapping relationship set for the terminal device is easy to implement, and signaling overheads are reduced. In another example, the network device may configure, with reference to a change status of channel environment information of the terminal device, a mapping relationship set corresponding to a modulation order. For example, when a change of the channel environment information of the terminal device is less than a change threshold, the network device may configure a mapping relationship set corresponding to a modulation order 1, and the like. For example, when a change of the channel environment information of the terminal device is greater than a change threshold, the network device may configure a mapping relationship set corresponding to a modulation order 2, and the like. Therefore, the network device may configure the mapping relationship set for the terminal device in time with reference to the change of the channel information, so that the terminal device uses, as much as possible, a mapping relationship that meets the channel environment information, to further improve demodulation performance. In still another example, the network device may configure, in a specific periodicity, a mapping relationship set corresponding to a modulation order. Specific occasions for sending the configuration information by the network device are not enumerated one by one herein.

In this embodiment of this application, the network device configures the mapping relationship set corresponding to the modulation order, so that more or fewer mapping relationships can be more flexibly configured for the terminal device. In addition, the network device configures a mapping relationship with reference to channel environment information. Therefore, the mapping relationship configured by the network device for the terminal device can better adapt to the channel environment information.

For the foregoing implementation 3 and implementation 4, the MCS information may have the following examples.

In an example a, the MCS information may indicate an encoding code rate of the TB and M mapping relationships.

For the example a, the at least two mapping relationships may have a same modulation order by default. For example, the modulation orders of the at least two mapping relationships may be indicated by using indexes of the at least two mapping relationships. For example, Table 1a shows an example of a relationship between a code rate index and a code rate, Table 2 shows an example of a relationship between an index of a mapping relationship and the mapping relationship, and Table 3 shows an example of a relationship between an index, a code rate, and a mapping relationship. A plurality of mapping relationships in Table 2 or Table 3 may be specific to different modulation orders. For example, in Table 2 or Table 3, a modulation order of a mapping relationship 1 to a mapping relationship n1 is a modulation order 1, a modulation order of a mapping relationship n1+1 to a mapping relationship n2 is a modulation order 2, and the like, which are not enumerated one by one herein. Both n1 and n2 are positive integers greater than 1. n2 is greater than n1. It may be understood that the code rate shown in Table 1a or Table 3 may also be referred to as an encoding code rate, a target code rate, or the like.

For example, as shown in Table 1a or Table 2, the MCS information may include an index of an encoding code rate and indexes of the M mapping relationships. The encoding code rate may be the encoding code rate of the TB. In this case, in the MCS information, location orders of the indexes of the M mapping relationships in the MCS information may sequentially correspond to M frequency domain resource units in ascending order of frequencies or M frequency domain resource units in descending order of frequencies. Alternatively, location orders of the indexes of the M mapping relationships in the MCS information may sequentially correspond to M time domain resource units in a time sequence. Alternatively, the indexes of the M mapping relationships in the MCS information may sequentially correspond to M time-frequency resource units in ascending order of frequencies or M time-frequency resource units in descending order of frequencies.

For another example, as shown in Table 3, the MCS information may include M indexes, and each index may correspond to a code rate and a mapping relationship. For example, the MCS information may include M indexes, and each index may correspond to one code rate and one mapping relationship. For a correspondence between the M indexes and the M resource units, refer to the foregoing descriptions. Details are not described herein again.

Related descriptions of Table 1a, Table 2, and Table 3 in the example a are also applicable to the following example b, example c, and the like. Details are not described below again.

As shown in Table 1a, when a code rate index is 1, a code rate R=378/1024=0.369; and when a code rate index is 2, a code rate R=434/1024=0.424, which are not enumerated one by one herein. It may be understood that Table 1a is shown by using an example in which a code length is 1024, but should not be understood as a limitation on embodiments of this application. For example, during specific implementation, the code length may alternatively be 2048 or the like, which is not enumerated one by one herein. The table shown in Table 1a is merely an example. During specific implementation, each index may alternatively directly correspond to a code rate. Table 1a may be transformed into Table 1b. This is not limited in embodiments of this application.

**Table 1a**

| Code rate index (code rate index) | Code rate R*[1024] |
|---|---|
| 1 | 378 |
| 2 | 434 |
| 3 | 490 |
| ... | ... |

**Table 1b**

| Code rate index (code rate index) | Code rate R |
|---|---|
| 1 | 0.369 |
| 2 | 0.424 |
| 3 | 0.479 |
| ... | ... |

**Table 2**

| Index of a mapping relationship (modulation set index) | Mapping relationship |
|---|---|
| 1 | Mapping relationship 1 |
| 2 | Mapping relationship 2 |
| 3 | Mapping relationship 3 |
| ... | ... |

**Table 3**

| Index (index) | Code rate | Mapping relationship |
|---|---|---|
| 1 | 378 | Mapping relationship 1 |
| 2 | 434 | Mapping relationship 2 |
| 3 | 490 | Mapping relationship 3 |
| ... | ... | ... |

In this embodiment of this application, a correspondence between the M mapping relationships and the M resource units is implicitly indicated by using the MCS information shown in the example a, so that signaling overheads of the MCS information can be reduced.

In another example b, the MCS information may indicate an encoding code rate of the TB and a mapping relationship corresponding to each resource unit.

For example, indexes are respectively set for the encoding code rate and the mapping relationship (as shown in Table 1a or Table 2). The MCS information may include an index of the encoding code rate, indexes of the M resource units, and indexes of the M mapping relationships. For example, the encoding code rate and the mapping relationship correspond to one index (as shown in Table 3). The MCS information may include indexes of the M resource units and M indexes, and each of the M indexes corresponds to one encoding code rate and one mapping relationship. Generally, a 1^{st} resource unit in the M resource units in the MCS information may correspond to a 1^{st} mapping relationship in the M mapping relationships. For related descriptions of the index of the resource unit, refer to the descriptions in the foregoing implementation 1 and implementation 2. Details are not described herein again.

For the example b, mapping relationships corresponding to all the resource units may have a same modulation order by default. For example, the modulation orders of the at least two mapping relationships may be indicated by using indexes of the at least two mapping relationships. For related descriptions of the modulation order, refer to the descriptions of Table 1 to Table 3 in the foregoing example a. Details are not described herein again.

In this embodiment of this application, a correspondence between the M mapping relationships and the M resource units is explicitly indicated by using the MCS shown in the example b, so that the terminal device can clearly learn of the mapping relationship corresponding to each resource unit.

In still another example c, the MCS information may indicate an encoding code rate of the TB, E mapping relationships, and a resource unit corresponding to each mapping relationship.

For example, indexes are respectively set for the encoding code rate and the mapping relationship (as shown in Table 1a or Table 2). The MCS information may include an index of the encoding code rate, indexes of the E mapping relationships, and an index of the resource unit corresponding to each mapping relationship. For example, the encoding code rate and the mapping relationship correspond to one index (as shown in Table 3). The MCS information may include E indexes and an index of the resource unit corresponding to each mapping relationship. Each of the E indexes corresponds to one encoding code rate and one mapping relationship. For related descriptions of the modulation order in the example c, refer to the descriptions of Table 1a to Table 3 in the foregoing example a. Details are not described herein again.

In still another example d, the MCS information may indicate an encoding code rate of the TB, the M mapping relationships, and a modulation order of each of the M mapping relationships.

For related descriptions of the encoding code rate, refer to Table 1a. Details are not described herein again. Table 4a shows an example of indexes of different mapping relationships of a same modulation order (for example, a modulation order 1 shown in Table 5). Table 4b shows an example of indexes of different mapping relationships of a same modulation order (for example, a modulation order 2 shown in Table 5). Table 5 shows an example of a relationship between a modulation order and an index. It may be understood that the mapping relationship shown in Table 2 may include different mapping relationships under a plurality of modulation orders, and modulation orders of mapping relationships shown in Table 4a and Table 4b are the same.

For example, the MCS information may include an index of the encoding code rate of the TB, an index of each of the M mapping relationships, and an index of the modulation order corresponding to each mapping relationship. For example, the MCS information may include an index 1 of the encoding code rate, an index of a mapping relationship A1, an index of a modulation order 1 corresponding to the mapping relationship A1, an index of a mapping relationship B2, an index of a modulation order 2 corresponding to the mapping relationship B2, and the like, which are not enumerated one by one herein. Certainly, when the M mapping relationships have a same modulation order, the MCS information may include the index of the encoding code rate, an index of the modulation order, and indexes of the M mapping relationships. For example, the MCS may include an index 1 of the encoding code rate, an index of a modulation order 1, an index of a mapping relationship A1, an index of a mapping relationship B1, and the like, which are not enumerated one by one herein.

**Table 4a**

| Index of a mapping relationship (modulation set index) | Mapping relationship |
|---|---|
| 1 | Mapping relationship A1 |
| 2 | Mapping relationship B1 |
| 3 | Mapping relationship C1 |
| ... | ... |

**Table 4b**

| Index of a mapping relationship (modulation set index) | Mapping relationship |
|---|---|
| 1 | Mapping relationship A2 |
| 2 | Mapping relationship B2 |
| 3 | Mapping relationship C2 |
| ... | ... |

**Table 5**

| Index of a modulation order (modulation order index) | Modulation order |
|---|---|
| 1 | Modulation order 1 |
| 2 | Modulation order 2 |
| 3 | Modulation order 3 |
| ... | ... |

For another example, the MCS information may include M indexes, and each index may correspond to an encoding code rate, a mapping relationship, and a modulation order. Table 6 shows an example in which one index corresponds to a code rate, a modulation order, and a mapping relationship. The example shown in Table 6 is merely an example. During specific implementation, the index, the code rate, the modulation order, and the mapping relationship may alternatively be represented in another manner, for example, Table 7 which is not enumerated one by one herein.

**Table 6**

| Index (index) | Code rate | Modulation order | Mapping relationship |
|---|---|---|---|
| 1 | 378 | Modulation order 1 | Mapping relationship A1 |
| 2 | 434 | Modulation order 1 | Mapping relationship B1 |
| 3 | 490 | Modulation order 1 | Mapping relationship C1 |
| ... | ... | ... | ... |
| X1 | 378 | Modulation order 2 | Mapping relationship A2 |
| X1+1 | 434 | Modulation order 2 | Mapping relationship B2 |
| ... | ... | ... | ... |

**Table 7**

| Index (index) | Code rate | Modulation order | Mapping relationship |
|---|---|---|---|
| 1 | 378 | Modulation order 1 | Mapping relationship A1 |
| 2 | 378 | Modulation order 2 | Mapping relationship A2 |
| ... | ... | ... | ... |
| Y1 | 434 | Modulation order 1 | Mapping relationship B1 |
| Y1+1 | 434 | Modulation order 2 | Mapping relationship B2 |
| ... | ... | ... | ... |
| Z1 | 490 | Modulation order 1 | Mapping relationship C1 |
| ... | ... | ... | ... |

In still another example e, the MCS information may indicate an encoding code rate of the TB, E mapping relationships, a resource unit corresponding to each mapping relationship, and a modulation order of each mapping relationship.

For example, Table 1a, Table 4a, and Table 5 are used as an example. The MCS information may include an index of the encoding code rate, an index of a modulation order 1, an index of one or more mapping relationships of the modulation order 1, a resource unit corresponding to each mapping relationship under the modulation order 1, an index of a modulation order 2, an index of one or more mapping relationships of the modulation order 2, and a resource unit corresponding to each mapping relationship under the modulation order 2. For other descriptions of the example e, refer to Table 6, Table 7, or the like. Details are not described herein again.

**In still another possible implementation 5,** the at least two mapping relationships (for example, the E mapping relationships are used as an example) and modulation orders corresponding to the at least two mapping relationships may be determined based on channel environment information of the M resource units, or the at least two mapping relationships are determined based on channel environment information of the M resource units. The channel environment information in embodiments of this application is first described below, and a method for determining the E mapping relationships or the modulation orders is then described.

**The channel environment information in embodiments of this application is described below.**

The channel environment information may indicate at least one of a channel environment type or channel information. For example, the channel information may be a channel estimation result obtained by the first apparatus through estimation by using a parameter related to the channel environment type, or the channel environment type may determine a specific calculation manner of the channel information. For example, the channel environment type may include but is not limited to at least one of the following: a channel response, a channel response amplitude, an RSRP, an SNR, an SINR, a CQI, a channel feature matrix, a channel covariance matrix, a channel compression representation, a channel delay spread, a channel Doppler spread, an interference status, or a quantity of paired users. With progress of the standards, another channel environment type used to calculate channel information may appear subsequently. This is not limited in embodiments of this application.

In an example, the channel environment information indicates a channel environment type corresponding to channel information. In this case, the channel information may be determined by both communication parties based on the channel environment type.

In another example, the channel environment information indicates channel information of a first channel environment type. For example, the first channel environment type may be predefined in a protocol, or may be configured by the network device. A specific setting manner of the first channel environment type is not limited in embodiments of this application. For related descriptions of the first channel environment type, refer to the foregoing descriptions of the channel environment type. Details are not described herein again.

In still another example, the channel environment information indicates channel information and a channel environment type corresponding to the channel information. For example, the channel environment information may indicate first channel information and a first channel environment type, and the first channel information is a channel estimation result determined based on a parameter related to the first channel environment type.

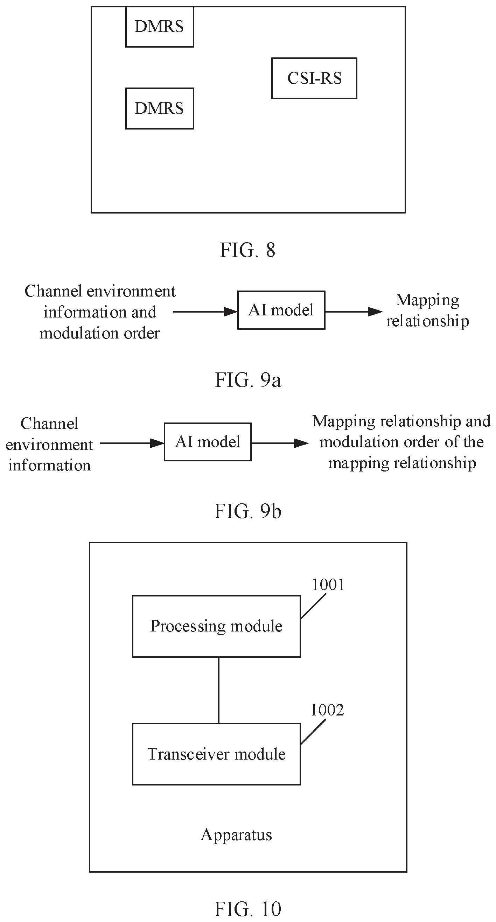

In still another example, in addition to the channel environment type and/or the channel information, the channel environment information may further indicate information about a reference signal. The reference signal may indicate which reference signal is used when the channel information is measured. FIG. 8 is a diagram of a reference signal according to an embodiment of this application. As shown in FIG. 8, when each resource unit corresponds to a plurality of reference signals, the channel environment information may indicate to generate at least two modulation schemes (or E mapping relationships and modulation orders) by using channel information measured by using a demodulation reference signal (demodulation reference signal, DMRS) in each resource unit. Alternatively, the channel environment information may indicate to generate at least two modulation schemes (or E mapping relationships and modulation orders) by using channel information measured by using a channel state information (channel state information, CSI) reference signal (CSI reference signal, CSI-RS) in each resource unit. For example, each of the M resource units may calculate the channel information by using the DMRS. For another example, some of the M resource units may calculate the channel information by using the DMRS, and some other resource units calculate the channel information by using the CSI-RS.

In this embodiment of this application, the channel information shown above may be channel information on one resource unit. For example, the channel information may be an average RSRP or an average SINR on a resource unit, which is not enumerated one by one herein. Alternatively, the channel information may be channel information on a specific resource in a resource unit. For example, the specific resource may be a 1^{st} RE or a 1^{st} RB in a resource unit, which is not enumerated one by one herein. For example, each of the M resource units may use channel information on a specific resource as channel information of the resource unit. For another example, some of the M resource units may use channel information on a specific resource as channel information of the resource units, and some other resource units use an average RSRP as channel information of the resource units, which are not enumerated one by one herein.

In this embodiment of this application, each resource unit may correspond to one piece of channel environment information. For example, each resource unit may correspond to a same channel environment type, or at least two of the M resource units may correspond to different channel environment types. For example, when channel information on different resource units is calculated by using a same channel environment type, channel information on at least two resource units (for example, E resource units) is different in the channel information on the different resource units. For example, channel information on two resource units in three resource units is different. For example, channel information on a first resource unit is the same as channel information on a second resource unit, and the channel information on the first resource unit is different from channel information on a third resource unit. Therefore, a mapping relationship corresponding to the first resource unit is the same as a mapping relationship corresponding to the second resource unit, and the mapping relationship corresponding to the first resource unit is different from a mapping relationship corresponding to the third resource unit. The difference shown herein may include different values of the channel information, different ranges to which the channel information belongs, or the like. A division manner of different channel information is not limited in embodiments of this application. Certainly, channel information on different resource units may alternatively be determined based on different channel environment types. In this case, the channel environment information may further indicate a correspondence between a resource unit and a channel environment type. For example, the channel environment information may indicate a channel environment type of each resource unit. For example, the channel environment information may include M channel environment types, and the M channel environment types may sequentially correspond to M resource units. For another example, the channel environment information may indicate a resource unit corresponding to each channel environment type.

**The method for determining the M mapping relationships (or E mapping relationships) or the modulation orders is described below with reference to the channel environment information.**

In a possible implementation 5A, the first apparatus may determine the M mapping relationships based on the channel environment information. In addition, the second apparatus may also determine the M mapping relationships based on the channel environment information.

In an example, as shown in FIG. 5a and FIG. 5b, the first apparatus may send channel environment information to the second apparatus, and correspondingly, the second apparatus receives the channel environment information. Therefore, both communication parties may determine the at least two mapping relationships based on the same channel environment information, thereby improving accuracy of prediction of the at least two mapping relationships.

In another example, a first channel environment type may be first predefined in a protocol, and then both communication parties each determine channel information based on the first channel environment type.

In still another example, a first channel environment type may be predefined, or may be configured. The first apparatus sends channel information to the second apparatus, and correspondingly, the second apparatus receives the channel information.

For the implementation 5A, both the first apparatus and the second apparatus may determine the M mapping relationships based on the same channel environment information. The same channel environment information shown herein means that for a same resource unit, both communication parties use a same channel environment type, and both the communication parties determine same channel information. Because the M mapping relationships are separately determined by the first apparatus or the second apparatus, during specific implementation, there may be a deviation between the mapping relationships respectively determined by the first apparatus and the second apparatus. 4-order modulation is used as an example. For example, a modulation symbol determined by the first apparatus and a modulation symbol determined by the second apparatus may have different phases and/or different amplitudes (or different real parts/different imaginary parts). However, because both the communication parties determine the modulation symbols based on same channel environment information, the foregoing difference is within an allowed error range. For example, to ensure that the error is within an allowed range, both the communication parties may measure the error based on specific bit error rates. When bit error rates of the mapping relationships determined by both the communication parties are within a specific range, it indicates that the error is small, and the error is within the allowed range. When a bit error rate of a mapping relationship exceeds a specific range, the first apparatus or the second apparatus may optimize the mapping relationship again until the bit error rate of the mapping relationship is within a specific range. For example, the mapping relationship is optimized by replacing an AI model configured to generate the mapping relationship.

For the foregoing implementation 5A, the MCS information may have the following example.

The MCS information may indicate an encoding code rate and a modulation order. Therefore, both communication parties may determine the M mapping relationships with reference to the modulation order indicated by the MCS information and the channel environment information.

For example, the MCS information may include an index of an encoding code rate of the TB and indexes of M modulation orders. The M modulation orders may sequentially correspond to the M resource units. For a correspondence between the M modulation orders and the M resource units, refer to the descriptions of the M mapping relationships and the M resource units in the foregoing example a. Details are not described herein again. For example, in the MCS information, location orders of the indexes of the M modulation orders in the MCS information may sequentially correspond to M frequency domain resource units in ascending order of frequencies or M frequency domain resource units in descending order of frequencies. Alternatively, location orders of the indexes of the M modulation orders in the MCS information may sequentially correspond to M time domain resource units in a time sequence. Alternatively, the indexes of the M modulation orders in the MCS information may sequentially correspond to M time-frequency resource units in ascending order of frequencies or M time-frequency resource units in descending order of frequencies. Alternatively, the indexes of the M modulation orders in the MCS information may sequentially correspond to M space domain resource units in ascending order of space domain resource indexes or M space-frequency resource units in descending order of space domain resource indexes.

For another example, when each resource unit corresponds to a same modulation order, the MCS information may include an index of an encoding code rate of the TB and an index of one modulation order. Including an index of one modulation order implicitly indicates that each resource unit corresponds to the same modulation order. For the index of the encoding code rate, refer to the foregoing descriptions of Table 1a. For the index of the modulation order, refer to the foregoing descriptions of Table 5. Details are not described herein again.

For another example, the MCS information may include M indexes, and each index may correspond to an encoding code rate and a modulation order. For a correspondence between the M indexes and the M resource units, refer to the descriptions of the M mapping relationships and the M resource units in the foregoing example a. Details are not described herein again. Table 8 shows an example in which one index may correspond to one code rate and one modulation order. Certainly, the example shown in Table 8 is merely an example, and should not be construed as a limitation on embodiments of this application.

**Table 8**

| Index (index) | Code rate | Modulation order |
|---|---|---|
| 1 | 378 | Modulation order 1 |
| 2 | 434 | Modulation order 1 |
| 3 | 490 | Modulation order 1 |
| ... | ... | ... |
| X1 | 378 | Modulation order 2 |
| X1+1 | 434 | Modulation order 2 |
| ... | ... | ... |

In this embodiment of this application, the first apparatus may determine the at least two mapping relationships based on an AI model. FIG. 9a is a diagram of an AI model according to an embodiment of this application. As shown in FIG. 9a, an input of the AI model may include channel environment information and a modulation order, and an output of the AI model may include a mapping relationship corresponding to the channel environment information. Similarly, the second apparatus may also determine, based on the AI model, a mapping relationship corresponding to each resource unit. Details are not described herein again. Correspondingly, this application provides an apparatus. The apparatus may include an AI entity, and the AI entity is configured to process the AI model (as shown in FIG. 9a). The processing may include one or more of training, updating, monitoring, inference application, or management (for example, registration or deregistration).

In another possible implementation 5B, the first apparatus may determine, based on the channel environment information, the M mapping relationships and the modulation orders corresponding to the M mapping relationships. In addition, the second apparatus may also determine, based on the channel environment information, the M mapping relationships and the modulation orders corresponding to the E mapping relationships.

For the implementation 5B, both the first apparatus and the second apparatus may determine, based on the same channel environment information, the M mapping relationships and the modulation orders corresponding to the M mapping relationships. For related descriptions of the same channel environment information, refer to the descriptions of the foregoing implementation 5A. Details are not described herein again. For related descriptions of the channel environment information in the implementation 5B, refer to the three examples in the implementation 5A. Details are not described herein again.

For the implementation 5B, the MCS information may have the following example.

The MCS information may indicate an encoding code rate. For example, the MCS information may include an index of an encoding code rate of the TB. Therefore, both communication parties may determine the M mapping relationships and a modulation order of each mapping relationship with reference to the channel environment information.

In this embodiment of this application, the first apparatus may determine, based on an AI model, a mapping relationship corresponding to each resource unit and a modulation order of the mapping relationship. FIG. 9b is a diagram of an AI model according to an embodiment of this application. As shown in FIG. 9b, an input of the AI model may include channel environment information, and an output of the AI model may include a mapping relationship corresponding to a resource unit and a modulation order of the mapping relationship. Similarly, the second apparatus may also determine, based on the AI model, a mapping relationship corresponding to each resource unit and a modulation order of the mapping relationship. Details are not described herein again.

Correspondingly, this application provides an apparatus. The apparatus may include an AI entity, and the AI entity is configured to process the AI model (as shown in FIG. 9b). The processing may include one or more of training, updating, monitoring, inference application, or management (for example, registration or deregistration).

For related descriptions of FIG. 9a and FIG. 9b, refer to the foregoing descriptions of the AI model. Details are not described herein again.

In this embodiment of this application, for the implementation 5A and the implementation 5B, the first apparatus may send, to the second apparatus, the channel environment information used by the first apparatus to determine the mapping relationship, so that the second apparatus may also determine the mapping relationship by using the channel environment information. This can ensure, as much as possible, that channel environment information used by both the communication parties to determine the mapping relationship is consistent, thereby improving accuracy of mapping relationship prediction.

For the implementation 5A and the implementation 5B, both the communication parties may dynamically generate a modulation parameter based on the same channel environment information. In the following implementation 5C and implementation 5D, the first apparatus may dynamically generate a modulation parameter based on the channel environment information, and then the first apparatus may indicate the modulation parameter to the second apparatus.

In still another possible implementation 5C, the first apparatus may determine the at least two mapping relationships based on the channel environment information. Then, the first apparatus sends indication information to the second apparatus, where the indication information may indicate the at least two mapping relationships.

In an example, the indication information may indicate M mapping relationships, and the M mapping relationships may sequentially correspond to M resource units. For a correspondence between the M mapping relationships and the M resource units, refer to the descriptions in the foregoing example a. Details are not described herein again. For example, in the indication information, location orders of the M mapping relationships in the indication information may sequentially correspond to M frequency domain resource units in ascending order of frequencies or M frequency domain resource units in descending order of frequencies. Alternatively, location orders of indexes of the M mapping relationships in the indication information may sequentially correspond to M time domain resource units in a time sequence. Alternatively, indexes of the M mapping relationships in the indication information may sequentially correspond to M time-frequency resource units in ascending order of frequencies or M time-frequency resource units in descending order of frequencies. Alternatively, indexes of the M mapping relationships in the indication information may sequentially correspond to M space domain resource units in ascending order of space domain resource indexes or M space-frequency resource units in descending order of space domain resource indexes.

In another example, the indication information may indicate E mapping relationships (or M mapping relationships) and a resource unit corresponding to each mapping relationship. For example, the indication information may include an index of each of the E mapping relationships and an index of the resource unit corresponding to each mapping relationship. For descriptions of the index of the resource unit, refer to the descriptions of step 401. Details are not described herein again.

For the implementation 5C, the MCS information may have the following example.

In an example, the MCS information may indicate an encoding code rate and a modulation order. For example, the MCS information may include an index of an encoding code rate of the TB and indexes of M modulation orders. For another example, the MCS information may include an index of an encoding code rate of the TB and an index of one modulation order. For another example, the MCS information may include M indexes, and each index may correspond to an encoding code rate and a modulation order. For related descriptions of the MCS information, refer to the descriptions of the foregoing implementation 5A. Details are not described herein again. In this embodiment of this application, for related descriptions of the AI model, refer to FIG. 9a. Details are not described herein again.

In another example, the MCS information may indicate an encoding code rate and a modulation order, and the MCS information may further include the indication information.

It may be understood that content indicated by the MCS information shown in the foregoing implementation 3 and implementation 4 is also applicable to the implementation 5C. For the implementation 5C, a modulation parameter is generated by the first apparatus with reference to channel environment information. For the implementation 3 and the implementation 4, the modulation parameter may be configured by the network device. Although manners of determining the modulation parameter are different, the modulation parameter may be indicated by using the MCS information. Therefore, for descriptions of the MCS information shown in the implementation 5C, refer to the foregoing example a to example e. Certainly, the descriptions of the MCS information herein are also applicable to the following implementation 5D. In other words, for descriptions of the MCS information shown in the implementation 5D, refer to the foregoing example a to example e. Details are not described below again.

In still another possible implementation 5D, the first apparatus may determine, based on the channel environment information, the at least two mapping relationships and the modulation orders corresponding to the at least two mapping relationships. Then, the first apparatus sends indication information to the second apparatus, where the indication information may indicate the at least two mapping relationships and the modulation orders corresponding to the at least two mapping relationships.

In an example, the indication information may indicate M mapping relationships and a modulation order of each mapping relationship. The M mapping relationships may sequentially correspond to M resource units. For a correspondence between the M mapping relationships and the M resource units, refer to the descriptions in the foregoing example a. Details are not described herein again.

In another example, the indication information may indicate E mapping relationships (or M mapping relationships), a resource unit corresponding to each mapping relationship, and a modulation order of each mapping relationship. Certainly, when the E mapping relationships have a same modulation order, the indication information may also indicate one modulation order.

For the implementation 5D, the MCS information may have the following example.

The MCS information may indicate an encoding code rate. For related descriptions of the MCS information, refer to the descriptions of the foregoing implementation 5B. Details are not described herein again. In this embodiment of this application, for related descriptions of the AI model, refer to FIG. 9b. Details are not described herein again. As shown in the foregoing implementation 5C, the MCS information may further include the foregoing indication information.

It may be understood that, for descriptions of the MCS information, refer to the foregoing example a to example e.

In this embodiment of this application, for the implementation 5C and the implementation 5D, the first apparatus may send, to the second apparatus, the mapping relationship determined by the first apparatus, so that both the communication parties can perform modulation or demodulation by using the same mapping relationship. This further ensures that both the communication parties can perform modulation or demodulation by using the same mapping relationship.

Apparatuses provided in embodiments of this application are described below.

In this application, the apparatus is divided into functional modules according to the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely a logical function division. During actual implementation, another division manner may be used. The apparatuses in embodiments of this application are described below in detail with reference to FIG. 10 to FIG. 12.

FIG. 10 is a diagram of a structure of an apparatus according to an embodiment of this application. As shown in FIG. 10, the apparatus includes a processing module 1001 and a transceiver module 1002. The transceiver module 1002 may implement a corresponding communication function, and the processing module 1001 is configured to implement a corresponding processing function. For example, the transceiver module 1002 may also be referred to as an interface, a communication interface, or a communication module.

In some embodiments of this application, the apparatus may be configured to perform an action performed by the first apparatus in the foregoing method embodiments. In this case, the first apparatus may be an AI entity, a network device, a chip or a functional module that may be configured in the AI entity or the network device, or the like. Alternatively, the first apparatus may be an AI entity, a terminal device, a chip or a functional module that may be configured in the AI entity or the terminal device, or the like. The transceiver module 1002 is configured to perform a sending/receiving-related operation of the first apparatus in the foregoing method embodiments, and the processing module 1001 is configured to perform a processing-related operation of the first apparatus in the foregoing method embodiments.

For example, the processing module 1001 may be configured to: obtain a to-be-modulated TB, and modulate the TB based on at least two mapping relationships, to obtain modulation symbols; and the transceiver module 1002 may be configured to output the modulation symbols.

For example, the processing module 1001 may be further configured to perform other processing on the modulation symbol; and the transceiver module 1002 may be further configured to send or output a signal obtained through other processing.

In an example, when the first apparatus includes an AI entity, a network device, or a chip or a functional module that may be configured in the AI entity or the network device, the transceiver module 1002 may be further configured to send or output MCS information. For example, the transceiver module 1002 may be further configured to send or output resource unit division information.

In another example, when the first apparatus includes an AI entity, a terminal device, or a chip or a functional module that may be configured in the AI entity or the terminal device, the transceiver module 1002 may be further configured to receive or input MCS information. For example, the transceiver module 1002 may be further configured to receive or input resource unit division information.

For example, the transceiver module 1002 may be further configured to send or output channel environment information, or send or output indication information.

For example, the processing module 1001 may include a modulation module. For example, the processing module 1001 may further include an obtaining module, an encoding module, and the like. For example, the transceiver module 1002 may include a radio frequency module and an antenna module. For example, the transceiver module 1002 may include a pin module.

FIG. 10 is reused. In some other embodiments of this application, the apparatus may be configured to perform actions performed by the second apparatus in the foregoing method embodiments. In this case, the apparatus may be an AI entity, or a terminal device, or a chip or a functional module that may be configured in the AI entity or the terminal device, or the like. Alternatively, the second apparatus may be an AI entity, a network device, or a chip or a functional module that may be configured in the AI entity or the network device, or the like. The transceiver module 1002 is configured to perform a sending/receiving-related operation of the second apparatus in the foregoing method embodiments, and the processing module 1001 is configured to perform a processing-related operation of the second apparatus in the foregoing method embodiments.

For example, the transceiver module 1002 may be configured to receive or input a signal transmitted through a channel; and the processing module 1001 may be configured to process the signal to obtain to-be-demodulated information.

For example, the transceiver module 1002 may be configured to input the to-be-demodulated information; and the processing module 1001 may be configured to demodulate the to-be-demodulated information based on at least two mapping relationships, to obtain a TB.

In an example, when the second apparatus includes an AI entity, a terminal device, or a chip or a functional module that may be configured in the AI entity or the terminal device, the transceiver module 1002 may be further configured to receive or input MCS information. For example, the transceiver module 1002 may be further configured to receive or input resource unit division information.

In another example, when the second apparatus includes an AI entity, a network device, or a chip or a functional module that may be configured in the AI entity or the network device, the transceiver module 1002 may be further configured to send or output MCS information. For example, the transceiver module 1002 may be further configured to send or output resource unit division information.

For example, the transceiver module 1002 may be further configured to: receive or input channel environment information; or receive or input indication information.

For example, the processing module 1001 may include a demodulation module. For example, the processing module 1001 may further include an obtaining module and a decoding module. For example, the transceiver module 1002 may include a radio frequency module and an antenna module. For example, the transceiver module 1002 may include a pin module.

FIG. 10 is reused. In still some embodiments of this application, the apparatus may be configured to perform the method in the foregoing implementation 5A to implementation 5D. For example, the apparatus may be an AI entity, an AI model, an AI functional module, or the like.

For example, the processing module 1001 may be configured to determine a modulation parameter by using channel environment information.

For example, the processing module 1001 may be configured to determine a to-be-sent modulation symbol by using the channel environment information and a to-be-sent bit stream. The transceiver module 1002 may be configured to output the to-be-sent modulation symbol.

For example, the processing module 1001 may be configured to determine, by using the channel environment information and a to-be-demodulated signal, a demodulated bit, for example, an LLR or an estimated value of the bit. The transceiver module 1002 may be configured to output the demodulated bit.

For example, the processing module 1001 may be configured to determine M mapping relationships with reference to the channel environment information; and the transceiver module 1002 may be configured to output the M mapping relationships.

For example, the processing module 1001 may be configured to determine the M mapping relationships and a modulation order of each mapping relationship with reference to the channel environment information; and the transceiver module 1002 may be configured to output the M mapping relationships and the modulation order of each mapping relationship. Optionally, in the foregoing embodiments, the apparatus may further include a storage module. The storage module may be configured to store instructions and/or data, and the processing module 1001 may read the instructions and/or the data in the storage module, to cause the apparatus to implement the foregoing method embodiments. For example, the storage module may further store the foregoing relationship between an encoding code rate and an index, a relationship between a mapping relationship and an index, or a relationship between an encoding code rate, a mapping relationship, and an index.

In the foregoing embodiments, for specific descriptions of terms or steps such as M resource units, the at least two mapping relationships, the MCS information, the resource unit division information, the indication information, and the AI model, refer to the descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The apparatus in embodiments of this application is described above. A possible product form of the apparatus is described below. Any form of product that has a function of the apparatus in FIG. 10 falls within the protection scope of embodiments of this application. The following description is merely an example, and does not limit the product form of the apparatus in embodiments of this application.

In a possible implementation, in the apparatus shown in FIG. 10, the processing module 1001 may be one or more processing circuits, and the transceiver module 1002 may be a transceiver circuit; or the transceiver module 1002 may be a sending module and a receiving module, the sending module may be a sending circuit, the receiving module may be a receiving circuit, and the sending module and the receiving module are integrated into one device, for example, a transceiver circuit. In this embodiment of this application, the processing circuit and the transceiver circuit may be coupled or the like. A manner of connecting the processing circuit and the transceiver circuit is not limited in this embodiment of this application. In a process of performing the foregoing method, a process of sending information in the foregoing method may be a process of outputting the information by the processing circuit. When outputting the information, the processing circuit outputs the information to the transceiver circuit, so that the transceiver circuit transmits (or outputs) the information. After the information is output by the processing circuit, other processing may further need to be performed on the information before the information arrives at the transceiver circuit. Similarly, a process of receiving information in the foregoing method may be a process of receiving the input information by the processing circuit. When the processing circuit receives the input information, the transceiver circuit receives the information, and inputs the information into the processing circuit. Further, after the transceiver circuit receives the information, other processing may need to be performed on the information before the information is input into the processing circuit.

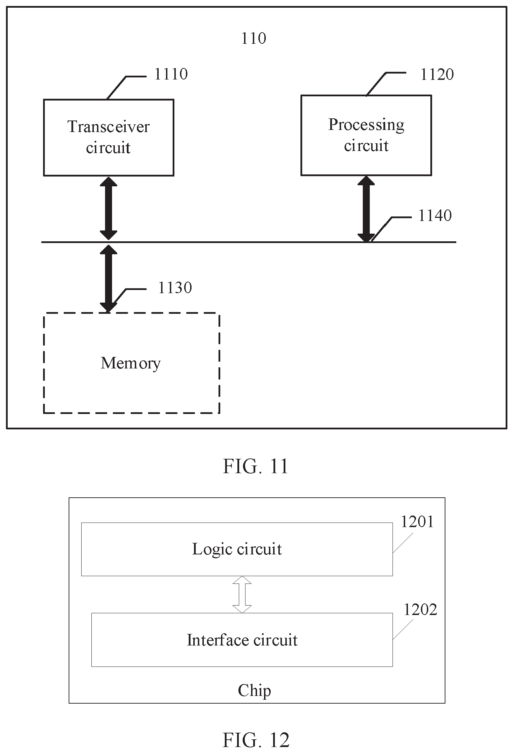

FIG. 11 is a diagram of a structure of an apparatus according to an embodiment of this application. As shown in FIG. 11, the apparatus 110 includes one or more processing circuits 1120 and a transceiver circuit 1110.

In some embodiments of this application, the apparatus may be configured to perform steps, methods, or functions performed by the first apparatus. For example, the processing circuit 1120 may be configured to perform the functions or the steps implemented by the processing module 1001 shown in FIG. 10, and the transceiver circuit 1110 may be configured to perform the functions or the steps implemented by the transceiver module 1002 shown in FIG. 10. For specific descriptions of the processing circuit 1120 and the transceiver circuit 1110, refer to FIG. 10 or the foregoing method embodiments. Details are not described herein again.

In some other embodiments of this application, the apparatus may be configured to perform steps, methods, or functions performed by the second apparatus. For example, the processing circuit 1120 may be configured to perform the functions or the steps implemented by the processing module 1001 shown in FIG. 10, and the transceiver circuit 1110 may be configured to perform the functions or the steps implemented by the transceiver module 1002 shown in FIG. 10. For specific descriptions of the processing circuit 1120 and the transceiver circuit 1110, refer to FIG. 10 or the foregoing method embodiments. Details are not described herein again.

For example, the processing circuit may be one or more processors, or all or some circuits of the one or more processors. The transceiver circuit may be a transceiver, an input/output circuit, an interface circuit, or the like.

For example, in each implementation of the apparatus shown in FIG. 11, the transceiver circuit may include a receiver and a transmitter. The receiver is configured to perform a receiving function (or operation). The transmitter is configured to perform a transmitting function (or operation). In addition, the transceiver circuit is configured to communicate with another device/apparatus through a transmission medium.

Optionally, the apparatus 110 may further include one or more memories 1130, configured to store program instructions and/or data. The memory 1130 is coupled to the processing circuit 1120. The coupling in this embodiment of this application may be an indirect coupling or a communication connection between apparatuses, units, or modules in an electrical form, a mechanical form, or another form, and is used for information exchange between the apparatuses, the units, or the modules. The processing circuit 1120 may collaboratively operate with the memory 1130. The processing circuit 1120 may execute the program instructions stored in the memory 1130. Optionally, at least one of the one or more memories may be included in the processing circuit.

In this embodiment of this application, a specific connection medium among the transceiver circuit 1110, the processing circuit 1120, and the memory 1130 is not limited. In this embodiment of this application, in FIG. 11, the memory 1130, the processing circuit 1120, and the transceiver circuit 1110 are connected to each other through a bus 1140. The bus is represented by using a bold line in FIG. 11. A manner of connection between other components is only schematically described, but is not used as a limitation. The bus may be classified into an address bus, a data bus, a control bus, and the like. For ease of representation, only one bold line is used to represent the bus in FIG. 11, but this does not mean that there is only one bus or only one type of bus.

In this embodiment of this application, the processing circuit may be a general-purpose processing circuit, a digital signal processing circuit, an application-specific integrated circuit, a field programmable gate array or another programmable logic device, a discrete gate or transistor logic device, a discrete hardware component, or the like, and may implement or perform the methods, steps, and logical block diagrams disclosed in embodiments of this application. The general-purpose processing circuit may be a microprocessor circuit, any conventional processing circuit, or the like. The steps of the methods disclosed with reference to embodiments of this application may be directly performed by a hardware processing circuit, or may be performed by using a combination of hardware and software modules in the processing circuit.

In this embodiment of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of instructions or a data structure and that can be read and/or written by a computer (for example, the apparatus shown in this application). However, this application is not limited thereto. The memory in embodiments of this application may alternatively be a circuit or any other apparatus that can implement a storage function, and is configured to store the program instructions and/or the data.

For example, the processing circuit 1120 is mainly configured to: process a communication protocol and communication data, control the entire apparatus, execute a software program, and process data of the software program. The memory 1130 is mainly configured to store the software program and the data. The transceiver circuit 1110 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the apparatus is powered on, the processing circuit 1120 may read the software program from the memory 1130, interpret and execute instructions of the software program, and process data of the software program. When data needs to be sent in a wireless manner, the processing circuit 1120 performs baseband processing on the to-be-sent data, and then outputs a baseband signal to a radio frequency circuit. The radio frequency circuit performs radio frequency processing on the baseband signal, and then sends a radio frequency signal to the outside in a form of an electromagnetic wave through the antenna. When data is sent to the apparatus, the radio frequency circuit receives a radio frequency signal through the antenna, converts the radio frequency signal into a baseband signal, and outputs the baseband signal to the processing circuit 1120. The processing circuit 1120 converts the baseband signal into data, and processes the data.

In another implementation, the radio frequency circuit and the antenna may be disposed independent of the processing circuit that performs baseband processing. For example, in a distributed scenario, the radio frequency circuit and the antenna may be remotely disposed independent of the apparatus.

The apparatus shown in this embodiment of this application may alternatively have more components and the like than those in FIG. 11. This is not limited in embodiments of this application. The methods performed by the processing circuit and the transceiver circuit are merely examples. For specific steps performed by the processing circuit and the transceiver circuit, refer to the methods described above.

In another possible implementation, in the apparatus shown in FIG. 10, the processing module 1001 may be one or more logic circuits, and the transceiver module 1002 may be an input/output interface that is also referred to as a communication interface, an interface circuit, an interface, or the like. Alternatively, the transceiver module 1002 may be a sending module and a receiving module. The sending module may be an output interface, and the receiving module may be an input interface. The sending module and the receiving module are integrated into one module, for example, an input/output interface.

FIG. 12 is a diagram of a structure of an apparatus according to an embodiment of this application. As shown in FIG. 12, the apparatus shown in FIG. 12 includes a logic circuit 1201 and an interface circuit 1202. In other words, the processing module 1001 may be implemented through the logic circuit 1201, and the transceiver module 1002 may be implemented through the interface circuit 1202. The logic circuit 1201 may be a chip, a processing circuit, an integrated circuit, a system on chip (system on chip, SoC), or the like. The interface circuit 1202 may be a communication interface, an input/output interface, a pin, or the like. For example, FIG. 12 shows an example in which the apparatus is a chip, and the chip includes the logic circuit 1201 and the interface circuit 1202.

In this embodiment of this application, the logic circuit and the interface circuit may be coupled to each other. A specific manner of connection between the logic circuit and the interface is not limited in this embodiment of this application. For example, the logic circuit 1201 may be configured to perform the functions or the steps implemented by the processing module 1001 shown in FIG. 10, and the interface circuit 1202 may be configured to perform the functions or the steps implemented by the transceiver module 1002 shown in FIG. 10. For specific descriptions of the logic circuit 1201 and the interface circuit 1202, refer to FIG. 10 or the foregoing method embodiments. Details are not described herein again.

The apparatus shown in embodiments of this application may implement the methods provided in embodiments of this application in a form of hardware, or may implement the methods provided in embodiments of this application in a form of software. This is not limited in embodiments of this application.

An embodiment of this application further provides a communication system. The communication system includes a first apparatus and a second apparatus. The first apparatus and the second apparatus may be configured to perform the method in any one of the foregoing embodiments.

In addition, this application further provides a computer program. The computer program is configured to implement operations and/or processing performed by apparatuses in the methods provided in this application.

This application further provides a computer-readable storage medium. The computer-readable storage medium stores computer code. When the computer code is run on a computer, the computer is caused to perform operations and/or processing performed by the apparatuses in the methods provided in this application.

This application further provides a computer program product. The computer program product includes computer code or a computer program. When the computer code or the computer program is run on a computer, operations and/or processing performed by the apparatuses in the methods provided in this application are/is performed.

In the several embodiments provided in this application, it should be understood that the disclosed system, apparatus, and method may be implemented in other manners. For example, the described apparatus embodiments are merely examples. For example, division into modules is merely logical functional division. In an actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the apparatuses or modules, or electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, the part contributing to the conventional technologies, or all or some of the technical solutions may be implemented in a form of a software product. The computer software product is stored in a readable storage medium, and includes a plurality of instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A modulation method, wherein the method comprises:
obtaining a to-be-modulated transport block TB, wherein a resource used to transmit the TB comprises M resource units, and M is an integer greater than or equal to 2;
modulating the TB based on at least two mapping relationships, to obtain modulation symbols, wherein at least two of the M resource units correspond to different mapping relationships, and the mapping relationship is a mapping relationship between a bit and a modulation symbol; and
outputting the modulation symbols.

2. The method according to claim 1, wherein the method is applied to a first apparatus, and the method further comprises:
when the first apparatus comprises a network device or a chip used in the network device, sending, by the first apparatus, modulation and coding scheme MCS information; or
when the first apparatus comprises a terminal device or a chip used in the terminal device, receiving, by the first apparatus, modulation and coding scheme MCS information.

3. The method according to claim 2, wherein the MCS information indicates an encoding code rate of the TB and the at least two mapping relationships, or the MCS information indicates an encoding code rate of the TB, the at least two mapping relationships, and modulation orders corresponding to the at least two mapping relationships.

4. The method according to claim 3, wherein the MCS information further indicates a resource unit corresponding to each of the at least two mapping relationships.

5. The method according to claim 3 or 4, wherein a mapping relationship set corresponding to a modulation order of each of the at least two mapping relationships is predefined in a protocol or is configured, and each of the at least two mapping relationships is comprised in the mapping relationship set corresponding to the modulation order of each mapping relationship.

6. The method according to claim 2, wherein the MCS information indicates an encoding code rate of the TB, or the MCS information indicates an encoding code rate of the TB and modulation orders corresponding to the at least two mapping relationships.

7. The method according to claim 6, wherein the at least two mapping relationships and the modulation orders corresponding to the at least two mapping relationships are determined based on channel environment information of the M resource units, or the at least two mapping relationships are determined based on channel environment information of the M resource units.

8. The method according to any one of claims 1 to 7, wherein the at least two resource units have different channel environment information.

9. The method according to claim 7 or 8, wherein the method further comprises:
sending the channel environment information; or
sending indication information, wherein the indication information indicates the at least two mapping relationships.

10. The method according to any one of claims 7 to 9, wherein the channel environment information indicates a channel environment type corresponding to channel information, or the channel environment information indicates channel information and a channel environment type corresponding to the channel information, or the channel environment information indicates channel information of a first channel environment type.

11. The method according to any one of claims 1 to 10, wherein the method is applied to a first apparatus, and the method further comprises:
when the first apparatus comprises a network device or a chip used in the network device, sending, by the first apparatus, resource unit division information, wherein the resource unit division information indicates locations of the M resource units; or
when the first apparatus comprises a terminal device or a chip used in the terminal device, receiving, by the first apparatus, resource unit division information, wherein the resource unit division information indicates locations of the M resource units.

12. The method according to claim 11, wherein frequency domain start locations of the M resource units are determined based on a start location of a bandwidth part BWP in which the resource is located.

13. The method according to any one of claims 1 to 12, wherein the M resource units are M frequency domain resource units, M time domain resource units, or M time-frequency resource units.

14. An apparatus, comprising a module configured to perform the method according to any one of claims 1 to 13.

15. An apparatus, comprising a processing circuit and a transceiver circuit, wherein the processing circuit is coupled to the transceiver circuit, to cause the apparatus to implement the method according to any one of claims 1 to 13.

16. An apparatus, comprising a logic circuit and an interface circuit, wherein the logic circuit is coupled to the interface circuit, to cause the apparatus to implement the method according to any one of claims 1 to 13.

17. A demodulation method, wherein the method comprises:
obtaining to-be-demodulated information of a modulation symbol, wherein a resource used to transmit the to-be-demodulated information comprises M resource units, and M is an integer greater than or equal to 2; and
demodulating the to-be-demodulated information based on at least two mapping relationships, to obtain a transport block TB, wherein at least two of the M resource units correspond to different mapping relationships, and the mapping relationship is a mapping relationship between a bit and a modulation symbol.

18. The method according to claim 17, wherein the method further comprises:
when the second apparatus comprises a terminal device or a chip or a functional module used in the terminal device, receiving, by the second apparatus, modulation and coding scheme MCS information; or
when the second apparatus comprises a network device or a chip or a functional module used in the network device, sending, by the second apparatus, modulation and coding scheme MCS information.

19. The method according to claim 17 or 18, wherein the MCS information indicates an encoding code rate of the TB and the at least two mapping relationships, or the MCS information indicates an encoding code rate of the TB, the at least two mapping relationships, and modulation orders corresponding to the at least two mapping relationships.

20. The method according to claim 19, wherein the MCS information further indicates a resource unit corresponding to each of the at least two mapping relationships.

21. The method according to claim 19 or 20, wherein a mapping relationship set corresponding to a modulation order of each of the at least two mapping relationships is predefined in a protocol or is configured, and each of the at least two mapping relationships is comprised in the mapping relationship set corresponding to the modulation order of each mapping relationship.

22. The method according to any one of claims 17 to 21, wherein the demodulating the to-be-demodulated information based on the at least two mapping relationships comprises:
determining the at least two mapping relationships based on the MCS information and the mapping relationship set, and demodulating the to-be-demodulated information based on the at least two mapping relationships.

23. The method according to claim 18, wherein the MCS information indicates an encoding code rate of the TB, or the MCS information indicates an encoding code rate of the TB and modulation orders corresponding to the at least two mapping relationships.

24. The method according to claim 23, wherein the at least two mapping relationships and the modulation orders corresponding to the at least two mapping relationships are determined based on channel environment information of the M resource units, or the at least two mapping relationships are determined based on channel environment information of the M resource units.

25. The method according to any one of claims 17 to 24, wherein the at least two resource units have different channel environment information.

26. The method according to claim 24 or 25, wherein the channel environment information indicates a channel environment type corresponding to channel information, or the channel environment information indicates channel information and a channel environment type corresponding to the channel information, or the channel environment information indicates channel information of a first channel environment type.

27. The method according to any one of claims 23 to 26, wherein the demodulating the to-be-demodulated information based on the at least two mapping relationships comprises:
receiving the channel environment information, determining the at least two mapping relationships based on the MCS information and the channel environment information, and demodulating the to-be-demodulated information based on the at least two mapping relationships; or
receiving indication information, determining the at least two mapping relationships based on the MCS information and the indication information, and demodulating the to-be-demodulated information based on the at least two mapping relationships, wherein the indication information indicates the at least two mapping relationships.

28. The method according to any one of claims 17 to 27, wherein the method further comprises:
when the second apparatus comprises a terminal device or a chip or a functional module used in the terminal device, receiving, by the second apparatus, resource unit division information, wherein the resource unit division information indicates locations of the M resource units; or
when the second apparatus comprises a network device or a chip or a functional module used in the network device, sending, by the second apparatus, resource unit division information, wherein the resource unit division information indicates locations of the M resource units.

29. The method according to claim 28, wherein frequency domain start locations of the M resource units are determined based on a start location of a bandwidth part BWP in which the resource is located.

30. The method according to any one of claims 17 to 29, wherein the M resource units are M frequency domain resource units, M time domain resource units, or M time-frequency resource units.

31. An apparatus, comprising a module configured to perform the method according to any one of claims 17 to 30.

32. An apparatus, comprising a processing circuit and a transceiver circuit, wherein the processing circuit is coupled to the transceiver circuit, to cause the apparatus to implement the method according to any one of claims 17 to 30.

33. An apparatus, comprising a logic circuit and an interface circuit, wherein the logic circuit is coupled to the interface circuit, to cause the apparatus to implement the method according to any one of claims 17 to 30.

34. A constellation diagram obtaining method, wherein the method comprises:
inputting channel environment information of a first resource unit into an artificial intelligence AI model, and outputting a constellation diagram corresponding to the first resource unit.

35. The method according to claim 34, wherein the method further comprises:
inputting a modulation order into the AI model, and outputting a constellation diagram corresponding to the modulation order.

36. A modulation method, wherein the method comprises:
inputting channel environment information of a first resource unit and a first to-be-sent bit into an AI model, and outputting a first to-be-sent modulation symbol corresponding to the first resource unit, wherein a first mapping relationship from the first to-be-sent bit to the first to-be-sent modulation symbol has a first modulation order.

37. The method according to claim 36, wherein the method further comprises:
inputting the first modulation order into the AI model.

38. The method according to claim 36 or 37, wherein the method further comprises:
inputting channel environment information of a second resource unit and a second to-be-sent bit into the AI model, and outputting a second to-be-sent modulation symbol corresponding to the second resource unit, wherein a second mapping relationship from the second to-be-sent bit to the second to-be-sent modulation symbol has the first modulation order or a second modulation order.

39. A demodulation method, wherein the method comprises:
inputting channel environment information of a first resource unit and a first to-be-demodulated signal into an AI model, and outputting a first bit corresponding to the first resource unit, wherein a first mapping relationship from the first to-be-demodulated signal to the first bit has a first modulation order.

40. The method according to claim 39, wherein the method further comprises:
inputting the first modulation order into the AI model.

41. The method according to claim 39 or 40, wherein the method further comprises:
inputting channel environment information of a second resource unit and a second to-be-demodulated signal into the AI model, and outputting a second bit corresponding to the second resource unit, wherein a second mapping relationship from the second to-be-demodulated signal to the second bit has the first modulation order or a second modulation order.

42. An apparatus, comprising a module configured to perform the method according to any one of claims 34 to 41.

43. An apparatus, comprising a processing circuit and a transceiver circuit, wherein the processing circuit is coupled to the transceiver circuit, to cause the apparatus to implement the method according to any one of claims 34 to 41.

44. An apparatus, comprising a logic circuit and an interface circuit, wherein the logic circuit is coupled to the interface circuit, to cause the apparatus to implement the method according to any one of claims 34 to 41.

45. A computer-readable storage medium, wherein the computer-readable storage medium is configured to store a computer program, and when the computer program is executed, the method according to any one of claims 1 to 13, the method according to any one of claims 17 to 30, or the method according to any one of claims 34 to 41 is performed.

46. A computer program product, wherein when the computer program product is executed, the method according to any one of claims 1 to 13, the method according to any one of claims 17 to 30, or the method according to any one of claims 34 to 41 is performed.

47. A communication system, wherein the communication system comprises a first apparatus and a second apparatus, the first apparatus is configured to perform the method according to any one of claims 1 to 13, and the second apparatus is configured to perform the method according to any one of claims 17 to 30; or the first apparatus is configured to perform the method according to any one of claims 36 to 38, and the second apparatus is configured to perform the method according to any one of claims 39 to 41.
